(19) **Europäisches Patentamt / European Patent Office / Office européen des brevets**

(11) **EP 4 482 121 B1**

(12) # EUROPEAN PATENT SPECIFICATION

(45) Date of publication and mention of the grant of the patent:
**06.05.2026 Bulletin 2026/19**

(21) Application number: **23773573.3**

(22) Date of filing: **01.03.2023**

(51) International Patent Classification (IPC):
*H04L 65/80* (2022.01)     *H04L 65/60* (2022.01)
*H04W 28/24* (2009.01)     *H04W 28/02* (2009.01)

(52) Cooperative Patent Classification (CPC):
**H04L 65/80; H04W 28/0263; H04W 28/0268**

(86) International application number:
**PCT/CN2023/079036**

(87) International publication number:
**WO 2023/179322 (28.09.2023 Gazette 2023/39)**

(54) **COMMUNICATION METHOD AND APPARATUS**

KOMMUNIKATIONSVERFAHREN UND -VORRICHTUNG

PROCÉDÉ ET APPAREIL DE COMMUNICATION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **21.03.2022 CN 202210278545**

(43) Date of publication of application:
**25.12.2024 Bulletin 2024/52**

(73) Proprietor: **Huawei Technologies Co., Ltd.**
**Shenzhen, Guangdong 518129 (CN)**

(72) Inventors:
- **XU, Rui**
  **Shenzhen, Guangdong 518129 (CN)**
- **QIN, Yi**
  **Shenzhen, Guangdong 518129 (CN)**
- **CHEN, Erkai**
  **Shenzhen, Guangdong 518129 (CN)**
- **CAO, Youlong**
  **Shenzhen, Guangdong 518129 (CN)**
- **CHEN, Weichao**
  **Shenzhen, Guangdong 518129 (CN)**

(74) Representative: **Isarpatent**
**Patent- und Rechtsanwälte**
**Barth Hassa Peckmann & Partner mbB**
**Friedrichstraße 31**
**80801 München (DE)**

(56) References cited:
CN-A- 107 046 717     CN-A- 113 923 788
CN-A- 113 973 341

- STEINBACH ECKEHARD ET AL: "Haptic Codecs for the Tactile Internet", PROCEEDINGS OF THE IEEE, 1 February 2019 (2019-02-01), US, pages 447 - 470, XP093267353, ISSN: 0018-9219, Retrieved from the Internet <URL:https://ieeexplore.ieee.org/stampPDF/getPDF.jsp?tp=&arnumber=8470161&ref=aHR0cHM6Ly9pZWVleHBsb3JlLmllZWUub3JnL2RvY3VtZW50Lzg0NzAxNjE=>[retrieved on 20250404], DOI: 10.1109/JPROC.2018.2867835
- "3rd Generation Partnership Project; Technical Specification Group Services and System Aspects; Study on supporting tactile and multi-modality communication services; Stage 1 (Release 18)", no. V18.0.0, 24 September 2021 (2021-09-24), pages 1 - 32, XP052056703, Retrieved from the Internet <URL:https://ftp.3gpp.org/Specs/archive/22_series/22.847/22847-i00.zip 22847-i00.doc> [retrieved on 20210924]

- "3rd Generation Partnership Project; Technical Specification Group Services and System Aspects; System architecture for the 5G System (5GS); Stage 2 (Release 17)", vol. SA WG2, no. V17.2.0, 24 September 2021 (2021-09-24), pages 1 - 542, XP052056728, Retrieved from the Internet <URL:https://ftp.3gpp.org/Specs/archive/23_series/23.501/23501-h20.zip 23501-h20.docx> [retrieved on 20210924]

# EP 4 482 121 B1

**Description**

## TECHNICAL FIELD

This disclosure generally relates to the field of communication technologies, and the inventnion in particular relates to a communication method and apparatus, as well as a computer-readable storage medium.

## BACKGROUND

In recent years, with continuous development of a 5th generation (5th generation, 5G) communication system, a data transmission latency is continuously reduced, and a transmission capacity is increasingly large. The 5G communication system gradually penetrates into some multimedia services that have high real-time performance and a large data capacity requirement, such as video transmission, cloud gaming (cloud gaming), and extended reality (extended reality, XR). XR may include virtual reality (virtual reality, VR) and augmented reality (augmented reality, AR).

As a new service, a multi-modal service is added with a tactile experience dimension on the basis of XR, which can implement remote touch and remote control, and implement remote sensing in a plurality of aspects such as vision, auditory, tactility, and kinesthetics. The multi-modal service has great development space in industrial automation, healthcare, distance education, and other related fields, provides users with comprehensive interactive experience, and has great application value and commercial potential. As a type of multi-modal services, tactile internet services can be classified into the following types:

Immersive tactile XR: Through complete simulation and real-time interaction of sensory information such as vision, auditory, and tactility, the immersive tactile XR can create immersive, empathetic, and realistic experience for users, and take the users through the virtual and real worlds.

Remote control: The tactile internet further enables tactility, which can significantly improve operators' sense of presence and improve operation precision. The remote control may be widely applied to scenarios such as industry and medical treatment.

Education and training: When learners execute a task involving fine motor skills, instructors can feel learners' movements and make corrections if necessary. The learners can see, hear, and feel exact movements that their instructors make, whether they are engineers, pilots, or surgeons.

Tactile broadcast: Tactile features are introduced on the basis of conventional broadcast, and tactile flows and broadcast flows are transmitted in a channel-associated manner, which can further improve viewing experience of audience.

It can be learned that in the multi-modal service, the users may complete various things through tactility. However, in the multi-modal service, how to resolve a problem of mismatch between a tactile sensing threshold and reliability needs to be further studied. Document : STEINBACH ECKEHARD ET AL titled "Haptic Codecs for the Tactile Internet",PROCEEDINGS OF THE IEEE, 1 February 2019 (2019-02-01), pages 447-470 represents background art.

## SUMMARY

The object of the present invention is to provide a communication method and apparatus, as well as a computer-reable storage medium, to include, in a data packet, indication information indicating a tactile sensing threshold, to ensure matching between the tactile sensing threshold and reliability. This object is solved according to the independent claims 1, 2, 5, 6 and further embodiments an improvements of the invention are listed in the dependent claims.

According to a first aspect, this application discloses a communication method. The communication method may be applied to a server, may be applied to a module (for example, a chip or a processor) in a server, or may be applied to a logical module or software that can implement all or some functions of a server. The following provides descriptions by using an example in which the method is performed by the server. The communication method may include: The server encodes a first signal to obtain a first data packet, where the first data packet includes first indication information indicating a first tactile sensing threshold; sends the first data packet to a user plane function (user plane function, UPF) network element; when the first signal, a second signal, and the first tactile sensing threshold meet a first condition, encodes the second signal to obtain a second data packet, where the second data packet includes second indication information indicating the first tactile sensing threshold, and the first signal and the second signal correspond to a same tactile flow; and sends the second data packet to the UPF network element.

In this embodiment of this application, a data packet sent by the server to the UPF network element includes indication information of a tactile sensing threshold, so that the UPF network element can send the data packet to an access network device by using a quality of service (quality of service, QoS) flow corresponding to the tactile sensing threshold, to ensure matching between the tactile sensing threshold and reliability. In addition, a to-be-sent signal is determined based on a previous sent signal, the tactile sensing threshold, and the first condition. When the previous sent

3

signal, the tactile sensing threshold, and the to-be-sent signal meet the first condition, the to-be-sent signal is sent. When the previous sent signal, the tactile sensing threshold, and the to-be-sent signal do not meet the first condition, the to-be-sent signal is not sent, so that a quantity of sent signals can be reduced, to reduce transmission resources.

In a possible implementation, the first condition may include: A ratio of an absolute value of a difference between the second signal and the first signal to the first signal is greater than or equal to the first tactile sensing threshold.

In this embodiment of this application, the first condition can ensure that the to-be-sent signal has a great difference from the previous sent signal, and filter out a signal that has a small difference from the previous sent signal, so that the quantity of sent signals can be reduced, to reduce the transmission resources.

In a possible implementation, the communication method may further include: When the second signal, a third signal, and a second tactile sensing threshold meet a second condition, the server encodes the third signal to obtain a third data packet, where the third data packet includes third indication information indicating the second tactile sensing threshold, and the second signal and the third signal correspond to a same tactile flow; and sends the third data packet to the UPF network element.

In this embodiment of this application, when the tactile sensing threshold changes, the to-be-sent signal may be determined based on a changed tactile sensing threshold and a changed condition, so that rationality and applicability of the sent signal can be ensured. In addition, when the tactile sensing threshold changes, a tactile sensing threshold indicated by the data packet also needs to change, so that the UPF network element can send the data packet to the access network device by using a QoS flow corresponding to the changed tactile sensing threshold, to flexibly ensure matching between the tactile sensing threshold and the reliability.

In a possible implementation, the second condition may include: A ratio of an absolute value of a difference between the third signal and the second signal to the second signal is greater than or equal to the second tactile sensing threshold.

In this embodiment of this application, the second condition can ensure that a to-be-sent signal has a great difference from a previous sent signal, and filter out a signal that has a small difference from the previous sent signal, so that a quantity of sent signals can be reduced, to reduce transmission resources.

In a possible implementation, the first data packet may correspond to one tactile flow, and the first tactile sensing threshold may be a tactile sensing threshold corresponding to the tactile flow.

In this embodiment of this application, when one data packet corresponds to one tactile flow, a tactile sensing threshold indicated by the data packet is a tactile sensing threshold corresponding to the tactile flow, so that a matching degree between the tactile flow and the tactile sensing threshold can be improved.

In a possible implementation, the first data packet may correspond to a plurality of tactile flows, and the first tactile sensing threshold may be a tactile sensing threshold corresponding to the plurality of tactile flows.

In this embodiment of this application, when one data packet corresponds to a plurality of tactile flows, signals corresponding to the plurality of tactile flows in the data packet share one data packet header, and it is not necessary to use one packet header for a signal corresponding to each tactile flow, so that a data transmission amount can be reduced, thereby reducing transmission resources.

According to a second aspect, this application discloses a communication method. The communication method may be applied to a UPF network element, may be applied to a module (for example, a chip or a processor) in a UPF network element, or may be applied to a logical module or software that can implement all or some functions of a UPF network element. The following provides descriptions by using an example in which the method is performed by the UPF network element. The communication method may include: The UPF network element receives a first data packet from a server, where the first data packet includes first indication information indicating a first tactile sensing threshold; and sends a fourth data packet to an access network device by using a first QoS flow, where the fourth data packet includes fourth indication information indicating the first tactile sensing threshold, and the first QoS flow is a QoS flow corresponding to the first tactile sensing threshold.

In this embodiment of this application, a data packet received from the server includes indication information of a tactile sensing threshold. Therefore, the UPF network element may send the data packet to the access network device by using a QoS flow corresponding to the tactile sensing threshold, to ensure matching between the tactile sensing threshold and reliability. In addition, a data packet sent by the UPF network element to the access network device includes the indication information of the tactile sensing threshold, so that the access network device can send the data packet to a terminal device by using a data radio bearer (data radio bearer, DRB) corresponding to the tactile sensing threshold, to further ensure matching between the tactile sensing threshold and the reliability.

In a possible implementation, the communication method may further include: The UPF network element receives a second data packet from the server, where the second data packet includes second indication information indicating the first tactile sensing threshold, the first data packet corresponds to a first signal, the second data packet corresponds to a second signal, the first signal, the second signal, and the first tactile sensing threshold meet a first condition, and the first signal and the second signal correspond to a same tactile flow; and sends a fifth data packet to the access network device by using a second QoS flow, where the fifth data packet includes fifth indication information indicating the first tactile sensing threshold, and the second QoS flow is a QoS flow corresponding to the first tactile sensing threshold.

In this embodiment of this application, a signal that corresponds to the data packet that is received by the UPF network element from the server is determined based on a signal corresponding to a previous data packet, the tactile sensing threshold, and the first condition. The UPF network element can receive a corresponding data packet only when the signal corresponding to the previous data packet and the tactile sensing threshold meet the first condition, so that a quantity of transmitted signals is reduced, to reduce transmission resources.

In a possible implementation, the first condition may include: A ratio of an absolute value of a difference between the second signal and the first signal to the first signal is greater than or equal to the first tactile sensing threshold.

In this embodiment of this application, the first condition can ensure that a to-be-transmitted signal has a great difference from a previous transmitted signal, and filter out a signal that has a small difference from the previous transmitted signal, so that the quantity of transmitted signals can be reduced, to reduce the transmission resources.

In a possible implementation, the communication method further includes: The UPF network element receives a third data packet from the server, where the third data packet includes third indication information indicating a second tactile sensing threshold, the third data packet corresponds to a third signal, the second signal, the third signal, and the second tactile sensing threshold meet a second condition, and the second signal and the third signal correspond to a same tactile flow; and sends a sixth data packet to the access network device by using a third QoS flow, where the sixth data packet includes sixth indication information indicating the second tactile sensing threshold, and the third QoS flow is a QoS flow corresponding to the second tactile sensing threshold.

In this embodiment of this application, when the tactile sensing threshold changes, the signal that corresponds to the data packet that is received by the UPF network element from the server is determined based on the signal corresponding to the previous data packet, a changed tactile sensing threshold, and a changed condition, so that rationality and applicability of the transmitted signal can be ensured. In addition, when the tactile sensing threshold changes, the data packet indicates the changed tactile sensing threshold, and the UPF network element can send the data packet to the access network device by using a QoS flow corresponding to the changed tactile sensing threshold, to flexibly ensure matching between the tactile sensing threshold and the reliability.

In a possible implementation, the second condition may include: A ratio of an absolute value of a difference between the third signal and the second signal to the second signal is greater than or equal to the second tactile sensing threshold.

In this embodiment of this application, the second condition can ensure that the to-be-transmitted signal has a great difference from the previous transmitted signal, and filter out the signal that has a small difference from the previous transmitted signal, so that the quantity of transmitted signals can be reduced, to reduce the transmission resources.

In a possible implementation, the first tactile sensing threshold corresponds to a first packet error rate (packet error rate, PER), and the first PER corresponds to the first QoS flow.

In a possible implementation, the first data packet may correspond to one tactile flow, and the first tactile sensing threshold may be a tactile sensing threshold corresponding to the tactile flow.

In this embodiment of this application, when one data packet corresponds to one tactile flow, a tactile sensing threshold indicated by the data packet is a tactile sensing threshold corresponding to the tactile flow, so that a matching degree between the tactile flow and the tactile sensing threshold can be improved.

In a possible implementation, the first data packet may correspond to a plurality of tactile flows, and the first tactile sensing threshold may be a tactile sensing threshold corresponding to the plurality of tactile flows.

In this embodiment of this application, when one data packet corresponds to a plurality of tactile flows, signals corresponding to the plurality of tactile flows in the data packet share one data packet header, and it is not necessary to use one packet header for a signal corresponding to each tactile flow, so that a data transmission amount can be reduced, thereby reducing the transmission resources.

According to a third aspect, this application discloses a communication method. The communication method may be applied to an access network device, may be applied to a module (for example, a chip or a processor) in an access network device, or may be applied to a logical module or software that can implement all or some functions of an access network device. The following provides descriptions by using an example in which the method is performed by the access network device. The communication method may include: The access network device receives a fourth data packet from a UPF network element by using a first QoS flow, where the fourth data packet includes fourth indication information indicating a first tactile sensing threshold, and the first QoS flow is a QoS flow corresponding to the first tactile sensing threshold; and sends a seventh data packet to a terminal device by using a first DRB, where the first QoS flow corresponds to the first DRB.

In this embodiment of this application, a data packet received from the UPF network element includes indication information of a tactile sensing threshold. Therefore, the access network device may send the data packet to the terminal device by using a DRB corresponding to the tactile sensing threshold, to ensure matching between the tactile sensing threshold and reliability.

In a possible implementation, the fourth data packet is a general packet radio system tunneling protocol (general packet radio system tunneling protocol, GTP)-user plane (GTP user, GTP-U) data packet, and a packet header of the GTP-U data packet may include the fourth indication information.

In a possible implementation, the access network device may determine a first resource based on the first tactile sensing threshold; and send the seventh data packet to the terminal device by using the first resource.

In this embodiment of this application, the access network device schedules a resource for the data packet based on the tactile sensing threshold, so that rationality and practicability of the scheduled resource can be ensured, to further ensure matching between the tactile sensing threshold and the reliability.

In a possible implementation, the access network device may determine the first resource based on QoS corresponding to the first tactile sensing threshold; and send the seventh data packet to the terminal device by using the first resource.

In this embodiment of this application, the access network device schedules the resource for the data packet based on the QoS corresponding to the tactile sensing threshold, so that the rationality and practicability of the scheduled resource can be ensured, to further ensure matching between the tactile sensing threshold and the reliability.

In a possible implementation, the fourth data packet corresponds to one tactile flow, and the first tactile sensing threshold is a tactile sensing threshold corresponding to the tactile flow.

In this embodiment of this application, when one data packet corresponds to one tactile flow, a tactile sensing threshold indicated by the data packet is a tactile sensing threshold corresponding to the tactile flow, so that a matching degree between the tactile flow and the tactile sensing threshold can be improved.

In a possible implementation, the fourth data packet corresponds to a plurality of tactile flows, and the first tactile sensing threshold is a tactile sensing threshold corresponding to the plurality of tactile flows.

In this embodiment of this application, when one data packet corresponds to a plurality of tactile flows, signals corresponding to the plurality of tactile flows in the data packet share one data packet header, and it is not necessary to use one packet header for a signal corresponding to each tactile flow, so that a data transmission amount can be reduced, thereby reducing transmission resources.

According to a fourth aspect, this application discloses a communication method. The communication method may be applied to a server, may be applied to a module (for example, a chip or a processor) in a server, or may be applied to a logical module or software that can implement all or some functions of a server. The following provides descriptions by using an example in which the method is performed by the server. The communication method may include: The server determines a first tactile sensing threshold; and sends, to a session management function (session management function, SMF) network element, the first tactile sensing threshold and information about a tactile flow corresponding to the first tactile sensing threshold.

In this embodiment of this application, the server sends a tactile sensing threshold and information about a corresponding tactile flow to the SMF network element, so that the SMF network element can deliver the tactile sensing threshold and the information about the corresponding tactile flow to a UPF network element and an access network device. In this way, when performing transmission of a data packet corresponding to the tactile flow, the UPF network element and the access network device may perform transmission based on the tactile sensing threshold, to ensure matching between the tactile sensing threshold and reliability.

In a possible implementation, the communication method may further include: The server encodes a first signal to obtain a first data packet, where the first data packet includes information about a first tactile flow, and the first tactile flow belongs to the tactile flow corresponding to the first tactile sensing threshold; sends the first data packet to the UPF network element; when the first signal, a second signal, and the first tactile sensing threshold meet a first condition, encodes the second signal to obtain a second data packet, where the second data packet includes the information about the first tactile flow, and the first signal and the second signal correspond to a same tactile flow; and sends the second data packet to the UPF network element.

In this embodiment of this application, a data packet sent by the server to the UPF network element includes information about a tactile flow, so that the UPF network element can determine the tactile sensing threshold based on the information about the tactile flow, and can send the data packet to the access network device based on a QoS flow corresponding to the tactile sensing threshold, to ensure matching between the tactile sensing threshold and the reliability. In addition, a to-be-sent signal is determined based on a previous sent signal, the tactile sensing threshold, and the first condition. When the previous sent signal, the tactile sensing threshold, and the to-be-sent signal meet the first condition, the to-be-sent signal is sent. When the previous sent signal, the tactile sensing threshold, and the to-be-sent signal do not meet the first condition, the to-be-sent signal is not sent, so that a quantity of sent signals can be reduced, to reduce transmission resources.

In a possible implementation, the first condition may include: A ratio of an absolute value of a difference between the second signal and the first signal to the first signal is greater than or equal to the first tactile sensing threshold.

In this embodiment of this application, the first condition can ensure that the to-be-sent signal has a great difference from the previous sent signal, and filter out a signal that has a small difference from the previous sent signal, so that the quantity of sent signals can be reduced, to reduce the transmission resources.

In a possible implementation, the communication method may further include: The server determines a second tactile sensing threshold; and sends, to the SMF network element, the second tactile sensing threshold and information about a tactile flow corresponding to the second tactile sensing threshold. The first tactile sensing threshold and the second tactile sensing threshold correspond to a same tactile flow.

In this embodiment of this application, when the tactile sensing threshold changes, the server sends a changed tactile sensing threshold and information about a corresponding tactile flow to the SMF network element, so that the SMF network element may deliver the changed tactile sensing threshold and the information about the corresponding tactile flow to the UPF network element and the access network device. In this way, when performing transmission of a data packet corresponding to the tactile flow, the UPF network element and the access network device may perform transmission based on the changed tactile sensing threshold, to flexibly ensure matching between the tactile sensing threshold and the reliability.

In a possible implementation, the communication method may further include: When the second signal, a third signal, and the second tactile sensing threshold meet a second condition, the server encodes the third signal to obtain a third data packet, where the third data packet includes the information about the first tactile flow, and the second signal and the third signal correspond to a same tactile flow; and sends the third data packet to the UPF network element.

In this embodiment of this application, when the tactile sensing threshold changes, the to-be-sent signal may be determined based on the changed tactile sensing threshold and a changed condition, so that rationality and applicability of the sent signal can be ensured.

In a possible implementation, the second condition may include: A ratio of an absolute value of a difference between the third signal and the second signal to the second signal is greater than or equal to the second tactile sensing threshold.

In this embodiment of this application, the second condition can ensure that the to-be-sent signal has a great difference from the previous sent signal, and filter out the signal that has a small difference from the previous sent signal, so that the quantity of sent signals can be reduced, to reduce the transmission resources.

In a possible implementation, the first tactile sensing threshold corresponds to one tactile flow, and the first tactile sensing threshold is a tactile sensing threshold corresponding to the tactile flow.

In this embodiment of this application, when one tactile sensing threshold corresponds to one tactile flow, the tactile sensing threshold is a tactile sensing threshold corresponding to the tactile flow, so that a matching degree between the tactile flow and the tactile sensing threshold can be improved.

In a possible implementation, the first tactile sensing threshold corresponds to a plurality of tactile flows, and the first tactile sensing threshold is a tactile sensing threshold corresponding to the plurality of tactile flows.

In this embodiment of this application, when one tactile sensing threshold corresponds to a plurality of tactile flows, the plurality of tactile flows may share one tactile sensing threshold, and it is not necessary to indicate one tactile sensing threshold for each tactile flow. This can reduce a transmission quantity of tactile sensing thresholds, to reduce the transmission resources.

According to a fifth aspect, this application discloses a communication method. The communication method may be applied to an SMF network element, may be applied to a module (for example, a chip or a processor) in an SMF network element, or may be applied to a logical module or software that can implement all or some functions of an SMF network element. The following provides descriptions by using an example in which the method is performed by the SMF network element. The communication method may include: The SMF network element receives, from a server, a first tactile sensing threshold and information about a tactile flow corresponding to the first tactile sensing threshold; sends, to a UPF network element, the first tactile sensing threshold and the information about the tactile flow corresponding to the first tactile sensing threshold; and sends, to an access network device, the first tactile sensing threshold and the information about the tactile flow corresponding to the first tactile sensing threshold.

In this embodiment of this application, after receiving a tactile sensing threshold and information about a corresponding tactile flow from the server, the SMF network element may deliver the tactile sensing threshold and the information about the corresponding tactile flow to the UPF network element and the access network device. In this way, when performing transmission of a data packet corresponding to the tactile flow, the UPF network element and the access network device may perform transmission based on the tactile sensing threshold, to ensure matching between the tactile sensing threshold and reliability.

In a possible implementation, that the SMF network element sends, to a UPF network element, the first tactile sensing threshold and the information about the tactile flow corresponding to the first tactile sensing threshold may include: sending a first data packet detection rule (packet detection rule, PDR) to the UPF network element, where the first PDR includes the first tactile sensing threshold and the information about the tactile flow corresponding to the first tactile sensing threshold. That the SMF network element sends, to an access network device, the first tactile sensing threshold and the information about the tactile flow corresponding to the first tactile sensing threshold may include: sending a first QoS profile to the access network device, where the first QoS profile includes the first tactile sensing threshold and the information about the tactile flow corresponding to the first tactile sensing threshold.

In this embodiment of this application, the SMF network element may deliver, to the UPF network element and the access network device through a QoS configuration, a tactile sensing threshold and information about a tactile flow corresponding to the tactile sensing threshold, and no dedicated signaling or message is needed for transmission, so that compatibility with an existing protocol can be improved.

In a possible implementation, the communication method may further include: The SMF network element determines the first PER based on the first tactile sensing threshold. That the SMF network element sends, to a UPF network element, the first tactile sensing threshold and the information about the tactile flow corresponding to the first tactile sensing threshold may include: The SMF network element sends, to the UPF network element, information about the first PER and information about a tactile flow corresponding to the first PER. That the SMF network element sends, to an access network device, the first tactile sensing threshold and the information about the tactile flow corresponding to the first tactile sensing threshold may include: sending, to the access network device, the information about the first PER and the information about the tactile flow corresponding to the first PER.

In a possible implementation, the communication method may include: The SMF network element receives, from the server, a second tactile sensing threshold and information about a tactile flow corresponding to the second tactile sensing threshold, where the first tactile sensing threshold and the second tactile sensing threshold correspond to a same tactile flow; sends, to the UPF network element, the second tactile sensing threshold and the information about the tactile flow corresponding to the second tactile sensing threshold; and sends, to the access network device, the second tactile sensing threshold and the information about the tactile flow corresponding to the second tactile sensing threshold.

In this embodiment of this application, when the tactile sensing threshold changes, the SMF network element receives a changed tactile sensing threshold and information about a corresponding tactile flow from the server, and may deliver the changed tactile sensing threshold and the information about the corresponding tactile flow to the UPF network element and the access network device. In this way, when performing transmission of a data packet corresponding to the tactile flow, the UPF network element and the access network device may perform transmission based on the changed tactile sensing threshold, to flexibly ensure matching between the tactile sensing threshold and the reliability.

In a possible implementation, that the SMF network element sends, to the UPF network element, the second tactile sensing threshold and the information about the tactile flow corresponding to the second tactile sensing threshold may include: sending a second PDR to the UPF network element, where the second PDR includes the second tactile sensing threshold and the information about the tactile flow corresponding to the second tactile sensing threshold. That the SMF network element sends, to the access network device, the second tactile sensing threshold and the information about the tactile flow corresponding to the second tactile sensing threshold may include: sending a second QoS profile to the access network device, where the second QoS profile includes the second tactile sensing threshold and the information about the tactile flow corresponding to the second tactile sensing threshold.

In a possible implementation, the communication method may further include: The SMF network element determines a second PER based on the second tactile sensing threshold. That the SMF network element sends, to the UPF network element, the second tactile sensing threshold and the information about the tactile flow corresponding to the second tactile sensing threshold may include: sending, to the UPF network element, information about the second PER and information about a tactile flow corresponding to the second PER. That the SMF network element sends, to the access network device, the second tactile sensing threshold and the information about the tactile flow corresponding to the second tactile sensing threshold may include: sending, to the access network device, the information about the second PER and the information about the tactile flow corresponding to the second PER.

According to a sixth aspect, this application discloses a communication method. The communication method may be applied to a UPF network element, may be applied to a module (for example, a chip or a processor) in a UPF network element, or may be applied to a logical module or software that can implement all or some functions of a UPF network element. The following provides descriptions by using an example in which the method is performed by the UPF network element. The communication method may include: The UPF network element receives, from an SMF network element, a first tactile sensing threshold and information about a tactile flow corresponding to the first tactile sensing threshold; receives a first data packet from a server, where the first data packet includes information about a first tactile flow, and the first tactile flow belongs to the tactile flow corresponding to the first tactile sensing threshold; and sends a fourth data packet to an access network device by using a first QoS flow, where the fourth data packet includes the information about the first tactile flow, and the first QoS flow is a QoS flow corresponding to the first tactile sensing threshold.

In this embodiment of this application, the UPF network element receives, from the SMF network element, a tactile sensing threshold and information about a tactile flow corresponding to the tactile sensing threshold. Therefore, after receiving a data packet that includes the information about the tactile flow and that is from the server, the UPF network element may determine the tactile sensing threshold corresponding to the information about the tactile flow, and may send the data packet to the access network device by using a QoS flow corresponding to the tactile sensing threshold, to ensure matching between the tactile sensing threshold and reliability. The data packet sent by the UPF network element to the access network device includes the information about the tactile flow, so that the access network device can send the data packet to a terminal device by using a DRB corresponding to the tactile sensing threshold, to further ensure matching between the tactile sensing threshold and the reliability.

In a possible implementation, that the UPF network element receives, from an SMF network element, a first tactile sensing threshold and information about a tactile flow corresponding to the first tactile sensing threshold may include: receiving a first PDR from the SMF network element, where the first PDR includes the first tactile sensing threshold and the information about the tactile flow corresponding to the first tactile sensing threshold.

In this embodiment of this application, the tactile sensing threshold and the information about the tactile flow corresponding to the tactile sensing threshold are delivered by the SMF network element to the UPF network element through a QoS configuration, and no dedicated signaling or message is needed for transmission, so that compatibility with an existing protocol can be improved.

In a possible implementation, that the UPF network element receives, from an SMF network element, a first tactile sensing threshold and information about a tactile flow corresponding to the first tactile sensing threshold may include: receiving, from the SMF network element, information about a first PER and information about a tactile flow corresponding to the first PER, where the first PER is a PER corresponding to the first tactile sensing threshold, and the first QoS flow is a QoS flow corresponding to the first PER.

In a possible implementation, the communication method may further include: The UPF network element receives a second data packet from the server, where the second data packet includes the information about the first tactile flow, the first data packet corresponds to a first signal, the second data packet corresponds to a second signal, the first signal, the second signal, and the first tactile sensing threshold meet a first condition, and the first signal and the second signal correspond to a same tactile flow; sends a fifth data packet to the access network device by using a second QoS flow, where the fifth data packet includes the information about the first tactile flow, and the second QoS flow is a QoS flow corresponding to the first tactile sensing threshold.

In this embodiment of this application, a signal that corresponds to the data packet that is received by the UPF network element from the server is determined based on a signal corresponding to a previous data packet, the tactile sensing threshold, and the first condition. The UPF network element can receive a corresponding data packet only when the signal corresponding to the previous data packet and the tactile sensing threshold meet the first condition, so that a quantity of transmitted signals is reduced, to reduce transmission resources.

In a possible implementation, the first condition may include: A ratio of an absolute value of a difference between the second signal and the first signal to the first signal is greater than or equal to the first tactile sensing threshold.

In this embodiment of this application, the first condition can ensure that a to-be-transmitted signal has a great difference from a previous transmitted signal, and filter out a signal that has a small difference from the previous transmitted signal, so that the quantity of transmitted signals can be reduced, to reduce the transmission resources.

In a possible implementation, the communication method may further include: The UPF network element receives, from the SMF network element, a second tactile sensing threshold and information about a tactile flow corresponding to the second tactile sensing threshold, where the first tactile sensing threshold and the second tactile sensing threshold correspond to a same tactile flow; receives a third data packet from the server, where the third data packet includes the information about the first tactile flow, the first tactile flow belongs to the tactile flow corresponding to the second tactile sensing threshold, the third data packet corresponds to a third signal, the second signal, the third signal, and the second tactile sensing threshold meet a second condition, and the second signal and the third signal correspond to a same tactile flow; and sends a sixth data packet to the access network device by using a third QoS flow, where the sixth data packet includes the information about the first tactile flow, and the third QoS flow is a QoS flow corresponding to the second tactile sensing threshold.

In this embodiment of this application, when the tactile sensing threshold changes, the signal that corresponds to the data packet that is received by the UPF network element from the server is determined based on the signal corresponding to the previous data packet, a changed tactile sensing threshold, and a changed condition, so that rationality and applicability of the transmitted signal can be ensured. In addition, when the tactile sensing threshold changes, the data packet indicates the changed tactile sensing threshold, and the UPF network element can send the data packet to the access network device by using a QoS flow corresponding to the changed tactile sensing threshold, to flexibly ensure matching between the tactile sensing threshold and the reliability.

In a possible implementation, the second condition may include: A ratio of an absolute value of a difference between the third signal and the second signal to the second signal is greater than or equal to the second tactile sensing threshold.

In this embodiment of this application, the second condition can ensure that the to-be-transmitted signal has a great difference from the previous transmitted signal, and filter out the signal that has a small difference from the previous transmitted signal, so that the quantity of transmitted signals can be reduced, to reduce the transmission resources.

In a possible implementation, that the UPF network element receives, from the SMF network element, a second tactile sensing threshold and information about a tactile flow corresponding to the second tactile sensing threshold may include: receiving a second PDR from the SMF network element, where the second PDR includes the second tactile sensing threshold and the information about the tactile flow corresponding to the second tactile sensing threshold.

In a possible implementation, that the UPF network element receives, from the SMF network element, a second tactile sensing threshold and information about a tactile flow corresponding to the second tactile sensing threshold may include: receiving, from the SMF network element, information about a second PER and information about a tactile flow corresponding to the second PER, where the second PER is a PER corresponding to the second tactile sensing threshold, and the third QoS flow is a QoS flow corresponding to the second PER.

In a possible implementation, the fourth data packet is a GTP-U data packet, and a packet header of the GTP-U data packet includes the information about the first tactile flow.

In a possible implementation, the first tactile sensing threshold corresponds to one tactile flow, and the first tactile sensing threshold is a tactile sensing threshold corresponding to the tactile flow.

In this embodiment of this application, when one tactile sensing threshold corresponds to one tactile flow, the tactile sensing threshold is a tactile sensing threshold corresponding to the tactile flow, so that a matching degree between the tactile flow and the tactile sensing threshold can be improved.

In a possible implementation, the first tactile sensing threshold corresponds to a plurality of tactile flows, and the first tactile sensing threshold is a tactile sensing threshold corresponding to the plurality of tactile flows.

In this embodiment of this application, when one tactile sensing threshold corresponds to a plurality of tactile flows, the plurality of tactile flows may share one tactile sensing threshold, and it is not necessary to indicate one tactile sensing threshold for each tactile flow. This can reduce a transmission quantity of tactile sensing thresholds, to reduce the transmission resources.

According to a seventh aspect, this application discloses a communication method. The communication method may be applied to an access network device, may be applied to a module (for example, a chip or a processor) in an access network device, or may be applied to a logical module or software that can implement all or some functions of an access network device. The following provides descriptions by using an example in which the method is performed by the access network device. The communication method may include: The access network device receives, from an SMF network element, a first tactile sensing threshold and information about a tactile flow corresponding to the first tactile sensing threshold; receives a fourth data packet from a UPF network element by using a first QoS flow, where the fourth data packet includes information about a first tactile flow, the first tactile flow belongs to the tactile flow corresponding to the first tactile sensing threshold, and the first QoS flow is a QoS flow corresponding to the first tactile sensing threshold; and sends a seventh data packet to a terminal device by using a first DRB, where the first QoS flow corresponds to the first DRB.

In this embodiment of this application, a data packet received from the UPF network element includes information about a tactile flow. Therefore, the access network device may determine a tactile sensing threshold corresponding to the information about the tactile flow, and may send the data packet to the terminal device by using a DRB corresponding to the tactile sensing threshold, to ensure matching between the tactile sensing threshold and reliability.

In a possible implementation, the fourth data packet is a GTP-U data packet, and a packet header of the GTP-U data packet includes the information about the first tactile flow.

In a possible implementation, that the access network device sends a seventh data packet to a terminal device may include: determining a first resource based on the first tactile sensing threshold; and sending the seventh data packet to the terminal device by using the first resource.

In this embodiment of this application, the access network device schedules a resource for the data packet based on the tactile sensing threshold, so that rationality and practicability of the scheduled resource can be ensured, to further ensure matching between the tactile sensing threshold and the reliability.

In a possible implementation, that the access network device sends a seventh data packet to a terminal device may include: determining the first resource based on QoS corresponding to the first tactile sensing threshold; and sending the seventh data packet to the terminal device by using the first resource.

In this embodiment of this application, the access network device schedules the resource for the data packet based on QoS corresponding to the tactile sensing threshold, so that the rationality and practicability of the scheduled resource can be ensured, to further ensure matching between the tactile sensing threshold and the reliability.

In a possible implementation, that the access network device receives, from an SMF, a first tactile sensing threshold and information about a tactile flow corresponding to the first tactile sensing threshold may include: receiving a first QoS profile from the SMF network element, where the first QoS profile includes the first tactile sensing threshold and the information about the tactile flow corresponding to the first tactile sensing threshold.

In this embodiment of this application, the tactile sensing threshold and information about a tactile flow corresponding to the tactile sensing threshold are delivered by the SMF network element to the access network device through a QoS configuration, and no dedicated signaling or message is needed for transmission, so that compatibility with an existing protocol can be improved.

In a possible implementation, that the access network device receives, from an SMF network element, a first tactile sensing threshold and information about a tactile flow corresponding to the first tactile sensing threshold may include: receiving, from the SMF network element, a first PER and information about a tactile flow corresponding to the first PER of the access network device, where the first PER is a PER corresponding to the first tactile sensing threshold, and the first QoS flow is a QoS flow corresponding to the first PER.

In a possible implementation, that the access network device sends a seventh data packet to a terminal device includes: determining the first resource based on the first PER; and sending the seventh data packet to the terminal device by using the first resource.

In a possible implementation, that the access network device sends a seventh data packet to a terminal device includes: determining the first resource based on QoS corresponding to the first PER; and sending the seventh data packet to the terminal device by using the first resource.

In a possible implementation, the first tactile sensing threshold corresponds to one tactile flow, and the first tactile sensing threshold is a tactile sensing threshold corresponding to the tactile flow.

In this embodiment of this application, when one tactile sensing threshold corresponds to one tactile flow, the tactile sensing threshold is a tactile sensing threshold corresponding to the tactile flow, so that a matching degree between the tactile flow and the tactile sensing threshold can be improved.

In a possible implementation, the first tactile sensing threshold corresponds to a plurality of tactile flows, and the first tactile sensing threshold is a tactile sensing threshold corresponding to the plurality of tactile flows.

In this embodiment of this application, when one tactile sensing threshold corresponds to a plurality of tactile flows, the plurality of tactile flows may share one tactile sensing threshold, and it is not necessary to indicate one tactile sensing threshold for each tactile flow. This can reduce a transmission quantity of tactile sensing thresholds, to reduce the transmission resources.

According to an eighth aspect, this application discloses a communication method. The communication method may be applied to a terminal device, may be applied to a module (for example, a chip or a processor) in a terminal device, or may be applied to a logical module or software that can implement all or some functions of a terminal device. The following provides descriptions by using an example in which the method is performed by the terminal device. The communication method may include: The terminal device encodes a first signal to obtain a first data packet; sends the first data packet to an access network device; when the first signal, a second signal, and a first tactile sensing threshold meet a first condition, encodes the second signal to obtain a second data packet, where the first signal and the second signal correspond to a same tactile flow; and sends the second data packet to the access network device.

In this embodiment of this application, the terminal device determines, based on a previous sent signal, a tactile sensing threshold, and the first condition, to send a signal. When the previous sent signal, the tactile sensing threshold, and a to-be-sent signal meet the first condition, the to-be-sent signal is sent. When the previous sent signal, the tactile sensing threshold, and the to-be-sent signal do not meet the first condition, the to-be-sent signal is not sent, so that a quantity of sent signals can be reduced, to reduce transmission resources.

In a possible implementation, the first data packet includes first indication information indicating the first tactile sensing threshold, and the second data packet includes second indication information indicating the first tactile sensing threshold.

In a possible implementation, the first condition may include: A ratio of an absolute value of a difference between the second signal and the first signal to the first signal is greater than or equal to the first tactile sensing threshold.

In this embodiment of this application, the first condition can ensure that the to-be-sent signal has a great difference from the previous sent signal, and filter out a signal that has a small difference from the previous sent signal, so that the quantity of sent signals can be reduced, to reduce the transmission resources.

In a possible implementation, that the terminal device sends the first data packet to an access network device may include: sending the first data packet to the access network device by using a first QoS flow, where the first QoS flow is a QoS flow corresponding to the first tactile sensing threshold.

In this embodiment of this application, the terminal device may send a data packet to the access network device by using a QoS flow corresponding to the tactile sensing threshold, to ensure matching between the tactile sensing threshold and reliability.

In a possible implementation, the first tactile sensing threshold corresponds to a first PER, and the first PER corresponds to the first QoS flow.

In a possible implementation, the first data packet is carried on a first DRB, and the first QoS flow corresponds to the first DRB.

In this embodiment of this application, the terminal device may send the data packet to the access network device by using a DRB corresponding to the tactile sensing threshold, to further ensure matching between the tactile sensing threshold and the reliability.

In a possible implementation, the communication method may further include: The terminal device sends information about the first data packet to the access network device, where the information about the first data packet includes information about the first tactile sensing threshold; and receives information about the first resource from the access network device. That the terminal device sends the first data packet to an access network device may include:

sending the first data packet to the access network device by using the first resource.

In this embodiment of this application, before sending the data packet, the terminal device may first send, to the access network device, information about a data packet including the tactile sensing threshold, so that the access network device can schedule a transmission resource for the data packet based on the tactile sensing threshold, so that rationality and practicability of the scheduled resource can be ensured, to further ensure matching between the tactile sensing threshold and the reliability.

In a possible implementation, the communication method may further include: When the second signal, a third signal, and a second tactile sensing threshold meet a second condition, the terminal device encodes the third signal to obtain a third data packet, where the second signal and the third signal correspond to a same tactile flow; and sends the third data packet to the access network device.

In this embodiment of this application, when the tactile sensing threshold changes, the to-be-sent signal may be determined based on a changed tactile sensing threshold and a changed condition, so that rationality and applicability of the sent signal can be ensured.

In a possible implementation, the third data packet includes third indication information indicating the second tactile sensing threshold.

In a possible implementation, the second condition may include: A ratio of an absolute value of a difference between the third signal and the second signal to the second signal is greater than or equal to the second tactile sensing threshold.

In this embodiment of this application, the second condition can ensure that the to-be-sent signal has a great difference from the previous sent signal, and filter out the signal that has a small difference from the previous sent signal, so that the quantity of sent signals can be reduced, to reduce the transmission resources.

In a possible implementation, the first data packet corresponds to one tactile flow, and the first tactile sensing threshold is a tactile sensing threshold corresponding to the tactile flow.

In this embodiment of this application, when one data packet corresponds to one tactile flow, a tactile sensing threshold corresponding to the data packet is a tactile sensing threshold corresponding to the tactile flow, so that a matching degree between the tactile flow and the tactile sensing threshold can be improved.

In a possible implementation, the first data packet corresponds to a plurality of tactile flows, and the first tactile sensing threshold is a tactile sensing threshold corresponding to the plurality of tactile flows.

In this embodiment of this application, when one data packet corresponds to a plurality of tactile flows, signals corresponding to the plurality of tactile flows in the data packet share one data packet header, and it is not necessary to use one packet header for a signal corresponding to each tactile flow, so that a data transmission amount can be reduced, thereby reducing the transmission resources.

According to a ninth aspect, this application discloses a communication method. The communication method may be applied to an access network device, may be applied to a module (for example, a chip or a processor) in an access network device, or may be applied to a logical module or software that can implement all or some functions of an access network device. The following provides descriptions by using an example in which the method is performed by the access network device. The communication method may include: The access network device receives a first data packet from a terminal device; sends a fourth data packet to a UPF network element; receives a second data packet from the terminal device, where the first data packet corresponds to a first signal, the second data packet corresponds to a second signal, the first signal, the second signal, and a first tactile sensing threshold meet a first condition, and the first signal and the second signal correspond to a same tactile flow; and sends a fifth data packet to the UPF network element.

In this embodiment of this application, a signal that corresponds to the data packet that is received by the access network device from the terminal device is determined based on a signal corresponding to a previous data packet, a tactile sensing threshold, and the first condition. The access network device can receive a corresponding data packet only when the signal corresponding to the previous data packet and the tactile sensing threshold meet the first condition, so that a quantity of transmitted signals is reduced, to reduce transmission resources.

In a possible implementation, the first data packet includes first indication information indicating the first tactile sensing threshold, and the second data packet includes second indication information indicating the first tactile sensing threshold.

In a possible implementation, the first condition may include: A ratio of an absolute value of a difference between the second signal and the first signal to the first signal is greater than or equal to the first tactile sensing threshold.

In this embodiment of this application, the first condition can ensure that a to-be-transmitted signal has a great difference from a previous transmitted signal, and filter out a signal that has a small difference from the previous transmitted signal, so that the quantity of transmitted signals can be reduced, to reduce the transmission resources.

In a possible implementation, that the access network device receives a first data packet from a terminal device may include: receiving the first data packet from the terminal device by using a first QoS flow, where the first QoS flow is a QoS flow corresponding to the first tactile sensing threshold.

In this embodiment of this application, the access network device may receive the data packet from the terminal device by using a QoS flow corresponding to the tactile sensing threshold, to ensure matching between the tactile sensing threshold and reliability.

In a possible implementation, the first data packet is carried on a first DRB, and the first QoS flow corresponds to the first DRB.

In this embodiment of this application, the access network device may receive the data packet from the terminal device by using a DRB corresponding to the tactile sensing threshold, to further ensure matching between the tactile sensing threshold and the reliability.

In a possible implementation, the communication method may further include: The access network device receives information about the first data packet from the terminal device, where the information about the first data packet includes information about the first tactile sensing threshold; determines a first resource based on the first tactile sensing threshold; and sends information about the first resource to the terminal device. That the access network device receives a first data packet from a terminal device may include: receiving the first data packet from the terminal device by using the first resource.

In this embodiment of this application, after receiving, from the terminal device, information about a data packet including the tactile sensing threshold, the access network device may schedule a transmission resource for the data packet based on the tactile sensing threshold, so that rationality and practicability of the scheduled resource can be ensured, to further ensure matching between the tactile sensing threshold and the reliability.

In a possible implementation, the communication method may further include: The access network device receives the information about the first data packet from the terminal device, where the information about the first data packet includes the information about the first tactile sensing threshold; determines the first resource based on QoS corresponding to the first tactile sensing threshold; and sends the information about the first resource to the terminal device. That the access network device receives a first data packet from a terminal device may include: receiving the first data packet from the terminal device by using the first resource.

In this embodiment of this application, after receiving, from the terminal device, the information about the data packet including the tactile sensing threshold, the access network device may schedule the transmission resource for the data packet based on QoS corresponding to the tactile sensing threshold, so that the rationality and practicability of the scheduled resource can be ensured, to further ensure matching between the tactile sensing threshold and the reliability.

In a possible implementation, the access network device receives a third data packet from the terminal device, where the third data packet corresponds to a third signal, the second signal, the third signal, and a second tactile sensing threshold meet a second condition, and the second signal and the third signal correspond to a same tactile flow; and sends a sixth data packet to the UPF network element.

In this embodiment of this application, when the tactile sensing threshold changes, a signal that corresponds to the data packet that is received by the access network device from the terminal device is determined based on the signal corresponding to the previous data packet, a changed tactile sensing threshold, and a changed condition, so that rationality and applicability of the transmitted signal can be ensured.

In a possible implementation, the third data packet includes third indication information indicating the second tactile sensing threshold.

In a possible implementation, the second condition may include: A ratio of an absolute value of a difference between the third signal and the second signal to the second signal is greater than or equal to the second tactile sensing threshold.

In this embodiment of this application, the second condition can ensure that the to-be-transmitted signal has a great difference from the previous transmitted signal, and filter out the signal that has a small difference from the previous transmitted signal, so that the quantity of transmitted signals can be reduced, to reduce the transmission resources.

In a possible implementation, the first data packet corresponds to one tactile flow, and the first tactile sensing threshold is a tactile sensing threshold corresponding to the tactile flow.

In this embodiment of this application, when one data packet corresponds to one tactile flow, a tactile sensing threshold corresponding to the data packet is a tactile sensing threshold corresponding to the tactile flow, so that a matching degree between the tactile flow and the tactile sensing threshold can be improved.

In a possible implementation, the first data packet corresponds to a plurality of tactile flows, and the first tactile sensing threshold is a tactile sensing threshold corresponding to the plurality of tactile flows.

In this embodiment of this application, when one data packet corresponds to a plurality of tactile flows, signals corresponding to the plurality of tactile flows in the data packet share one data packet header, and it is not necessary to use one packet header for a signal corresponding to each tactile flow, so that a data transmission amount can be reduced, thereby reducing the transmission resources.

According to a tenth aspect, this application discloses a communication apparatus. The communication apparatus may be applied to a server, may be applied to a module (for example, a chip or a processor) in a server, or may be applied to a logical module or software that can implement all or some functions of a server. The communication apparatus may include: a processing unit, configured to encode a first signal to obtain a first data packet, where the first data packet includes first indication information indicating a first tactile sensing threshold; and an interface unit, configured to send the first data packet to a UPF network element. The processing unit is further configured to: when the first signal, a second signal, and the first tactile sensing threshold meet a first condition, encode the second signal to obtain a second data packet, where the second data packet includes second indication information indicating the first tactile sensing threshold, and the first signal and the second signal correspond to a same tactile flow. The interface unit is further configured to send the second data packet to the UPF network element.

In a possible implementation, the first condition may include: A ratio of an absolute value of a difference between the second signal and the first signal to the first signal is greater than or equal to the first tactile sensing threshold.

In a possible implementation, the processing unit is further configured to: when the second signal, a third signal, and a second tactile sensing threshold meet a second condition, encode the third signal to obtain a third data packet, where the third data packet includes third indication information indicating the second tactile sensing threshold, and the second signal and the third signal correspond to a same tactile flow. The interface unit is further configured to send the third data packet to the UPF network element.

In a possible implementation, the second condition may include: A ratio of an absolute value of a difference between the third signal and the second signal to the second signal is greater than or equal to the second tactile sensing threshold.

In a possible implementation, the first data packet may correspond to one tactile flow, and the first tactile sensing threshold may be a tactile sensing threshold corresponding to the tactile flow.

In a possible implementation, the first data packet may correspond to a plurality of tactile flows, and the first tactile sensing threshold may be a tactile sensing threshold corresponding to the plurality of tactile flows.

According to an eleventh aspect, this application discloses a communication apparatus. The communication apparatus may be applied to a UPF network element, may be applied to a module (for example, a chip or a processor) in a UPF network element, or may be applied to a logical module or software that can implement all or some functions of a UPF network element. The communication apparatus may include: an interface unit, configured to receive a first data packet from a server, where the first data packet includes first indication information indicating a first tactile sensing threshold. The interface unit is further configured to send a fourth data packet to an access network device by using a first QoS flow, where the fourth data packet includes fourth indication information indicating the first tactile sensing threshold, and the first QoS flow is a QoS flow corresponding to the first tactile sensing threshold.

In a possible implementation, the interface unit is further configured to receive a second data packet from the server, where the second data packet includes second indication information indicating the first tactile sensing threshold, the first data packet corresponds to a first signal, the second data packet corresponds to a second signal, the first signal, the second signal, and the first tactile sensing threshold meet a first condition, and the first signal and the second signal correspond to a same tactile flow. The interface unit is further configured to send a fifth data packet to the access network device by using a second QoS flow, where the fifth data packet includes fifth indication information indicating the first tactile sensing threshold, and the second QoS flow is a QoS flow corresponding to the first tactile sensing threshold.

In a possible implementation, the first condition may include: A ratio of an absolute value of a difference between the second signal and the first signal to the first signal is greater than or equal to the first tactile sensing threshold.

In a possible implementation, the interface unit is further configured to receive a third data packet from the server, where the third data packet includes third indication information indicating a second tactile sensing threshold, the third data packet corresponds to a third signal, the second signal, the third signal, and the second tactile sensing threshold meet a second condition, and the second signal and the third signal correspond to a same tactile flow. The interface unit is further configured to send a sixth data packet to the access network device by using a third QoS flow, where the sixth data packet includes sixth indication information indicating the second tactile sensing threshold, and the third QoS flow is a QoS flow corresponding to the second tactile sensing threshold.

In a possible implementation, the second condition may include: A ratio of an absolute value of a difference between the third signal and the second signal to the second signal is greater than or equal to the second tactile sensing threshold.

In a possible implementation, the first tactile sensing threshold corresponds to a first PER, and the first PER corresponds to the first QoS flow.

In a possible implementation, the first data packet may correspond to one tactile flow, and the first tactile sensing threshold may be a tactile sensing threshold corresponding to the tactile flow.

In a possible implementation, the first data packet may correspond to a plurality of tactile flows, and the first tactile sensing threshold may be a tactile sensing threshold corresponding to the plurality of tactile flows.

According to a twelfth aspect, this application discloses a communication apparatus. The communication apparatus may be applied to an access network device, may be applied to a module (for example, a chip or a processor) in an access network device, or may be applied to a logical module or software that can implement all or some functions of an access network device. The communication apparatus may include: an interface unit, configured to receive a fourth data packet from a UPF network element by using a first QoS flow, where the fourth data packet includes fourth indication information indicating a first tactile sensing threshold, and the first QoS flow is a QoS flow corresponding to the first tactile sensing threshold; and a processing unit, configured to control the interface unit to send a seventh data packet to a terminal device by using a first DRB, where the first QoS flow corresponds to the first DRB.

In a possible implementation, the fourth data packet is a GTP-U data packet, and a packet header of the GTP-U data packet may include fourth indication information.

In a possible implementation, that the processing unit controls the interface unit to send the seventh data packet to the terminal device includes: The processing unit determines a first resource based on the first tactile sensing threshold; and the interface unit sends the seventh data packet to the terminal device by using the first resource.

In a possible implementation, that the processing unit controls the interface unit to send the seventh data packet to the terminal device includes: The processing unit determines a first resource based on QoS corresponding to the first tactile sensing threshold; and the interface unit sends the seventh data packet to the terminal device by using the first resource.

In a possible implementation, the fourth data packet corresponds to one tactile flow, and the first tactile sensing threshold is a tactile sensing threshold corresponding to the tactile flow.

In a possible implementation, the fourth data packet corresponds to a plurality of tactile flows, and the first tactile sensing threshold is a tactile sensing threshold corresponding to the plurality of tactile flows.

According to a thirteenth aspect, this application discloses a communication apparatus. The communication apparatus may be applied to a server, may be applied to a module (for example, a chip or a processor) in a server, or may be applied to a logical module or software that can implement all or some functions of a server. The communication apparatus may include: a processing unit, configured to determine a first tactile sensing threshold; and an interface unit, configured to send, to an SMF network element, the first tactile sensing threshold and information about a tactile flow corresponding to the first tactile sensing threshold.

In a possible implementation, the processing unit is further configured to encode a first signal to obtain a first data packet, where the first data packet includes information about a first tactile flow, and the first tactile flow belongs to the tactile flow corresponding to the first tactile sensing threshold. The interface unit is further configured to send the first data packet to a UPF network element. The processing unit is further configured to: when the first signal, a second signal, and the first tactile sensing threshold meet a first condition, encode the second signal to obtain a second data packet, where the second data packet includes the information about the first tactile flow, and the first signal and the second signal correspond to a same tactile flow. The interface unit is further configured to send the second data packet to the UPF network element.

In a possible implementation, the first condition may include: A ratio of an absolute value of a difference between the second signal and the first signal to the first signal is greater than or equal to the first tactile sensing threshold.

In a possible implementation, the processing unit is further configured to determine a second tactile sensing threshold. The interface unit is further configured to send, to the SMF network element, the second tactile sensing threshold and information about a tactile flow corresponding to the second tactile sensing threshold. The first tactile sensing threshold and the second tactile sensing threshold correspond to a same tactile flow.

In a possible implementation, the processing unit is further configured to: when the second signal, a third signal, and the second tactile sensing threshold meet a second condition, encode the third signal to obtain a third data packet, where the third data packet includes the information about the first tactile flow, and the second signal and the third signal correspond to a same tactile flow. The interface unit is further configured to send the third data packet to the UPF network element.

In a possible implementation, the second condition may include: A ratio of an absolute value of a difference between the third signal and the second signal to the second signal is greater than or equal to the second tactile sensing threshold.

In a possible implementation, the first tactile sensing threshold corresponds to one tactile flow, and the first tactile sensing threshold is a tactile sensing threshold corresponding to the tactile flow.

In a possible implementation, the first tactile sensing threshold corresponds to a plurality of tactile flows, and the first tactile sensing threshold is a tactile sensing threshold corresponding to the plurality of tactile flows.

According to a fourteenth aspect, this application discloses a communication apparatus. The communication apparatus may be applied to an SMF network element, may be applied to a module (for example, a chip or a processor) in an SMF network element, or may be applied to a logical module or software that can implement all or some functions of an SMF network element. The communication apparatus may include: an interface unit, configured to receive, from a server, a first tactile sensing threshold and information about a tactile flow corresponding to the first tactile sensing threshold. The interface unit is further configured to send, to a UPF network element, the first tactile sensing threshold and the information about the tactile flow corresponding to the first tactile sensing threshold. The interface unit is further configured to send, to an access network device, the first tactile sensing threshold and the information about the tactile flow corresponding to the first tactile sensing threshold.

In a possible implementation, that the interface unit sends, to the UPF network element, the first tactile sensing threshold and the information about the tactile flow corresponding to the first tactile sensing threshold may include: sending a first PDR to the UPF network element, where the first PDR includes the first tactile sensing threshold and the information about the tactile flow corresponding to the first tactile sensing threshold. That the interface unit sends, to the access network device, the first tactile sensing threshold and the information about the tactile flow corresponding to the first tactile sensing threshold includes: sending a first QoS profile to the access network device, where the first QoS profile includes the first tactile sensing threshold and the information about the tactile flow corresponding to the first tactile sensing threshold.

In a possible implementation, the communication apparatus may further include: a processing unit, configured to determine a first PER based on the first tactile sensing threshold. That the interface unit sends, to the UPF network element, the first tactile sensing threshold and the information about the tactile flow corresponding to the first tactile sensing threshold may include: sending, to the UPF network element, information about the first PER and information about a tactile flow corresponding to the first PER. That the interface unit sends, to the access network device, the first tactile sensing threshold and the information about the tactile flow corresponding to the first tactile sensing threshold may include: sending, to the access network device, the information about the first PER and the information about the tactile flow corresponding to the first PER.

In a possible implementation, the interface unit is further configured to receive, from the server, a second tactile sensing threshold and information about a tactile flow corresponding to the second tactile sensing threshold, where the first tactile sensing threshold and the second tactile sensing threshold correspond to a same tactile flow. The interface unit is further configured to send, to the UPF network element, the second tactile sensing threshold and the information about the tactile flow corresponding to the second tactile sensing threshold. The interface unit is further configured to send, to the access network device, the second tactile sensing threshold and the information about the tactile flow corresponding to the second tactile sensing threshold.

In a possible implementation, that the interface unit sends, to the UPF network element, the second tactile sensing threshold and the information about the tactile flow corresponding to the second tactile sensing threshold may include: sending a second PDR to the UPF network element, where the second PDR includes the second tactile sensing threshold and the information about the tactile flow corresponding to the second tactile sensing threshold. That the interface unit sends, to the access network device, the second tactile sensing threshold and the information about the tactile flow corresponding to the second tactile sensing threshold may include: sending a second QoS profile to the access network device, where the second QoS profile includes the second tactile sensing threshold and the information about the tactile flow corresponding to the second tactile sensing threshold.

In a possible implementation, the processing unit is further configured to determine a second PER based on the second tactile sensing threshold. That the interface unit sends, to the UPF network element, the second tactile sensing threshold and the information about the tactile flow corresponding to the second tactile sensing threshold may include: sending, to the UPF network element, information about the second PER and information about a tactile flow corresponding to the second PER. That the interface unit sends, to the access network device, the second tactile sensing threshold and the information about the tactile flow corresponding to the second tactile sensing threshold may include: sending, to the access network device, the information about the second PER and the information about the tactile flow corresponding to the second PER.

According to a fifteenth aspect, this application discloses a communication apparatus. The communication apparatus may be applied to a UPF network element, may be applied to a module (for example, a chip or a processor) in a UPF network element, or may be applied to a logical module or software that can implement all or some functions of a UPF network element. The communication apparatus may include: an interface unit, configured to receive, from an SMF network element, a first tactile sensing threshold and information about a tactile flow corresponding to the first tactile sensing threshold. The interface unit is further configured to receive a first data packet from a server, where the first data packet includes information about a first tactile flow, and the first tactile flow belongs to the tactile flow corresponding to the first tactile sensing threshold. The interface unit is further configured to send a fourth data packet to an access network device by using a first QoS flow, where the fourth data packet includes the information about the first tactile flow, and the first QoS flow is a QoS flow corresponding to the first tactile sensing threshold.

In a possible implementation, that the interface unit receives, from the SMF network element, the first tactile sensing threshold and the information about the tactile flow corresponding to the first tactile sensing threshold may include: receiving a first PDR from the SMF network element, where the first PDR includes the first tactile sensing threshold and the information about the tactile flow corresponding to the first tactile sensing threshold.

In a possible implementation, that the interface unit receives, from the SMF network element, the first tactile sensing threshold and the information about the tactile flow corresponding to the first tactile sensing threshold includes: receiving, from the SMF network element, information about a first PER and information about a tactile flow corresponding to the first PER, where the first PER is a PER corresponding to the first tactile sensing threshold, and the first QoS flow is a QoS flow corresponding to the first PER.

In a possible implementation, the interface unit is further configured to receive a second data packet from the server, where the second data packet includes the information about the first tactile flow, the first data packet corresponds to a first signal, the second data packet corresponds to a second signal, the first signal, the second signal, and the first tactile sensing threshold meet a first condition, and the first signal and the second signal correspond to a same tactile flow. The interface unit is further configured to send a fifth data packet to the access network device by using a second QoS flow, where the fifth data packet includes the information about the first tactile flow, and the second QoS flow is a QoS flow corresponding to the first tactile sensing threshold.

In a possible implementation, the first condition may include: A ratio of an absolute value of a difference between the second signal and the first signal to the first signal is greater than or equal to the first tactile sensing threshold.

In a possible implementation, the interface unit is further configured to receive, from the SMF network element, a second tactile sensing threshold and information about a tactile flow corresponding to the second tactile sensing threshold, where the first tactile sensing threshold and the second tactile sensing threshold correspond to a same tactile flow. The interface unit is further configured to receive a third data packet from the server, where the third data packet includes the information about the first tactile flow, the first tactile flow belongs to the tactile flow corresponding to the second tactile sensing threshold, the third data packet corresponds to a third signal, the second signal, the third signal, and the second tactile sensing threshold meet a second condition, and the second signal and the third signal correspond to a same tactile flow. The interface unit is further configured to send a sixth data packet to the access network device by using a third QoS flow, where the sixth data packet includes the information about the first tactile flow, and the third QoS flow is a QoS flow corresponding to the second tactile sensing threshold.

In a possible implementation, the second condition may include: A ratio of an absolute value of a difference between the third signal and the second signal to the second signal is greater than or equal to the second tactile sensing threshold.

In a possible implementation, that the interface unit receives, from the SMF network element, the second tactile sensing threshold and the information about the tactile flow corresponding to the second tactile sensing threshold may include: receiving a second PDR from the SMF network element, where the second PDR includes the second tactile sensing threshold and the information about the tactile flow corresponding to the second tactile sensing threshold.

In a possible implementation, that the interface unit receives, from the SMF network element, the second tactile sensing threshold and the information about the tactile flow corresponding to the second tactile sensing threshold includes: receiving, from the SMF network element, information about a second PER and information about a tactile flow corresponding to the second PER, where the second PER is a PER corresponding to the second tactile sensing threshold, and the third QoS flow is a QoS flow corresponding to the second PER.

In a possible implementation, the fourth data packet may be a GTP-U data packet, and a packet header of the GTP-U data packet may include the information about the first tactile flow.

In a possible implementation, the first tactile sensing threshold corresponds to one tactile flow, and the first tactile sensing threshold is a tactile sensing threshold corresponding to the tactile flow.

In a possible implementation, the first tactile sensing threshold corresponds to a plurality of tactile flows, and the first tactile sensing threshold is a tactile sensing threshold corresponding to the plurality of tactile flows.

According to a sixteenth aspect, this application discloses a communication apparatus. The communication apparatus may be applied to an access network device, may be applied to a module (for example, a chip or a processor) in an access network device, or may be applied to a logical module or software that can implement all or some functions of an access network device. The following provides descriptions by using an example in which the method is performed by the access network device. The communication method may include: an interface unit, configured to receive, from an SMF network element, a first tactile sensing threshold and information about a tactile flow corresponding to the first tactile sensing threshold, where the interface unit is further configured to receive a fourth data packet from a UPF network element by using a first QoS flow, the fourth data packet includes information about a first tactile flow, the first tactile flow belongs to the tactile flow corresponding to the first tactile sensing threshold, and the first QoS flow is a QoS flow corresponding to the first tactile sensing threshold; and a processing unit, configured to control the interface unit to send a seventh data packet to a terminal device by using a first DRB, where the first QoS flow corresponds to the first DRB.

In a possible implementation, the fourth data packet is a GTP-U data packet, and a packet header of the GTP-U data packet includes the information about the first tactile flow.

In a possible implementation, that the processing unit controls the interface unit to send the seventh data packet to the terminal device may include: The processing unit determines a first resource based on the first tactile sensing threshold; and the interface unit sends the seventh data packet to the terminal device by using the first resource.

In a possible implementation, that the processing unit controls the interface unit to send the seventh data packet to the terminal device may include: The processing unit determines the first resource based on QoS corresponding to the first tactile sensing threshold; and the interface unit sends the seventh data packet to the terminal device by using the first resource.

In a possible implementation, that the interface unit receives, from the SMF network element, the first tactile sensing threshold and the information about the tactile flow corresponding to the first tactile sensing threshold includes:

receiving a first QoS profile from the SMF network element, where the first QoS profile includes the first tactile sensing threshold and the information about the tactile flow corresponding to the first tactile sensing threshold.

In a possible implementation, that the interface unit receives, from the SMF network element, the first tactile sensing threshold and the information about the tactile flow corresponding to the first tactile sensing threshold includes: receiving, from the SMF network element, a first PER and information about a tactile flow corresponding to the first PER, where the first PER is a PER corresponding to the first tactile sensing threshold, and the first QoS flow is a QoS flow corresponding to the first PER.

In a possible implementation, that the processing unit controls the interface unit to send the seventh data packet to the terminal device may include: The processing unit determines the first resource based on the first PER; and the interface unit sends the seventh data packet to the terminal device by using the first resource.

In a possible implementation, that the processing unit controls the interface unit to send the seventh data packet to the terminal device includes: The processing unit determines the first resource based on QoS corresponding to the first PER; and the interface unit sends the seventh data packet to the terminal device by using the first resource.

In a possible implementation, the first tactile sensing threshold corresponds to one tactile flow, and the first tactile sensing threshold is a tactile sensing threshold corresponding to the tactile flow.

In a possible implementation, the first tactile sensing threshold corresponds to a plurality of tactile flows, and the first tactile sensing threshold is a tactile sensing threshold corresponding to the plurality of tactile flows.

According to a seventeenth aspect, this application discloses a communication apparatus. The communication apparatus may be applied to a terminal device, may be applied to a module (for example, a chip or a processor) in a terminal device, or may be applied to a logical module or software that can implement all or some functions of a terminal device. The following provides descriptions by using an example in which the method is performed by the terminal device. The communication method may include: a processing unit, configured to encode a first signal to obtain a first data packet; and an interface unit, configured to send the first data packet to an access network device. The processing unit is further configured to: when the first signal, a second signal, and a first tactile sensing threshold meet a first condition, encode the second signal to obtain a second data packet, where the first signal and the second signal correspond to a same tactile flow. The interface unit is further configured to send the second data packet to the access network device.

In a possible implementation, the first data packet includes first indication information indicating the first tactile sensing threshold, and the second data packet includes second indication information indicating the first tactile sensing threshold.

In a possible implementation, the first condition may include: A ratio of an absolute value of a difference between the second signal and the first signal to the first signal is greater than or equal to the first tactile sensing threshold.

In a possible implementation, that the interface unit sends the first data packet to the access network device may include: sending the first data packet to the access network device by using a first QoS flow, where the first QoS flow is a QoS flow corresponding to the first tactile sensing threshold.

In a possible implementation, the first tactile sensing threshold corresponds to a first PER, and the first PER corresponds to the first QoS flow.

In a possible implementation, the first data packet is carried on a first DRB, and the first QoS flow corresponds to the first DRB.

In a possible implementation, the interface unit is further configured to send information about the first data packet to the access network device, where the information about the first data packet includes information about the first tactile sensing threshold. The interface unit is further configured to receive information about a first resource from the access network device. That the interface unit sends the first data packet to the access network device may include: sending the first data packet to the access network device by using the first resource.

In a possible implementation, the processing unit is further configured to: when the second signal, a third signal, and a second tactile sensing threshold meet a second condition, encode the third signal to obtain a third data packet, where the second signal and the third signal correspond to a same tactile flow. The interface unit is further configured to send the third data packet to the access network device.

In a possible implementation, the third data packet includes third indication information indicating the second tactile sensing threshold.

In a possible implementation, the second condition may include: A ratio of an absolute value of a difference between the third signal and the second signal to the second signal is greater than or equal to the second tactile sensing threshold.

In a possible implementation, the first data packet corresponds to one tactile flow, and the first tactile sensing threshold is a tactile sensing threshold corresponding to the tactile flow.

In a possible implementation, the first data packet corresponds to a plurality of tactile flows, and the first tactile sensing threshold is a tactile sensing threshold corresponding to the plurality of tactile flows.

According to an eighteenth aspect, this application discloses a communication apparatus. The communication apparatus may be applied to an access network device, may be applied to a module (for example, a chip or a processor) in an access network device, or may be applied to a logical module or software that can implement all or some functions of an access network device. The communication apparatus may include: an interface unit, configured to receive a first data packet from a terminal device. The interface unit is further configured to send a fourth data packet to a UPF network element. The interface unit is further configured to receive a second data packet from the terminal device, where the first data packet corresponds to a first signal, the second data packet corresponds to a second signal, the first signal, the second signal, and a first tactile sensing threshold meet a first condition, and the first signal and the second signal correspond to a same tactile flow. The interface unit is further configured to send a fifth data packet to the UPF network element.

In a possible implementation, the first data packet includes first indication information indicating the first tactile sensing threshold, and the second data packet includes second indication information indicating the first tactile sensing threshold.

In a possible implementation, the first condition may include: A ratio of an absolute value of a difference between the second signal and the first signal to the first signal is greater than or equal to the first tactile sensing threshold.

In a possible implementation, that the interface unit receives the first data packet from the terminal device includes: receiving the first data packet from the terminal device by using a first QoS flow, where the first QoS flow is a QoS flow corresponding to the first tactile sensing threshold.

In a possible implementation, the first data packet is carried on a first DRB, and the first QoS flow corresponds to the first DRB.

In a possible implementation, the interface unit is further configured to receive information about the first data packet from the terminal device, where the information about the first data packet includes information about the first tactile sensing threshold. The communication apparatus may further include: a processing unit, configured to determine a first resource based on the first tactile sensing threshold. The interface unit is further configured to send information about the first resource to the terminal device. That the interface unit receives the first data packet from the terminal device may include: receiving the first data packet from the terminal device by using the first resource.

In a possible implementation, the interface unit is further configured to receive the information about the first data packet from the terminal device, where the information about the first data packet includes the information about the first tactile sensing threshold. The communication apparatus may further include: a processing unit, configured to determine the first resource based on QoS corresponding to the first tactile sensing threshold. The interface unit is further configured to send the information about the first resource to the terminal device. That the interface unit receives the first data packet from the terminal device may include: receiving the first data packet from the terminal device by using the first resource.

In a possible implementation, the interface unit is further configured to receive a third data packet from the terminal device, where the third data packet corresponds to a third signal, the second signal, the third signal, and a second tactile sensing threshold meet a second condition, and the second signal and the third signal correspond to a same tactile flow. The interface unit is further configured to send a sixth data packet to the UPF network element.

In a possible implementation, the third data packet includes third indication information indicating the second tactile sensing threshold.

In a possible implementation, the second condition may include: A ratio of an absolute value of a difference between the third signal and the second signal to the second signal is greater than or equal to the second tactile sensing threshold.

In a possible implementation, the first data packet corresponds to one tactile flow, and the first tactile sensing threshold is a tactile sensing threshold corresponding to the tactile flow.

In a possible implementation, the first data packet corresponds to a plurality of tactile flows, and the first tactile sensing threshold is a tactile sensing threshold corresponding to the plurality of tactile flows.

According to a nineteenth aspect, this application discloses a communication apparatus. The communication apparatus may be a server in the foregoing method embodiments, or a chip or a processor disposed in the server. The communication apparatus includes a processor. The processor is coupled to a memory. The memory is configured to store a program or instructions. When the program or the instructions is/are executed by the processor, the communication apparatus is enabled to perform the method performed by the server, or the chip or the processor in the server in the foregoing method embodiments.

According to a twentieth aspect, this application discloses a communication apparatus. The communication apparatus may be an SMF network element in the foregoing method embodiments, or a chip or a processor disposed in the SMF network element. The communication apparatus includes a processor. The processor is coupled to a memory. The memory is configured to store a program or instructions. When the program or the instructions is/are executed by the processor, the communication apparatus is enabled to perform the method performed by the SMF network element, or the chip or the processor in the SMF network element in the foregoing method embodiments.

According to a twenty-first aspect, this application discloses a communication apparatus. The communication apparatus may be a UPF network element in the foregoing method embodiments, or a chip or a processor disposed in the UPF network element. The communication apparatus includes a processor. The processor is coupled to a memory. The memory is configured to store a program or instructions. When the program or the instructions is/are executed by the processor, the communication apparatus is enabled to perform the method performed by the UPF network element, or the chip or the processor in the UPF network element in the foregoing method embodiments.

According to a twenty-second aspect, this application discloses a communication apparatus. The communication apparatus may be an access network device in the foregoing method embodiments, or a chip or a processor disposed in the access network device. The communication apparatus includes a processor. The processor is coupled to a memory. The memory is configured to store a program or instructions. When the program or the instructions is/are executed by the processor, the communication apparatus is enabled to perform the method performed by the access network device, or the chip or the processor in the access network device in the foregoing method embodiments.

According to a twenty-third aspect, this application discloses a communication apparatus. The communication apparatus may be a terminal device in the foregoing method embodiments, or a chip or a processor disposed in the terminal device. The communication apparatus includes a processor. The processor is coupled to a memory. The memory is configured to store a program or instructions. When the program or the instructions is/are executed by the processor, the communication apparatus is enabled to perform the method performed by the terminal device, or the chip or the processor in the terminal device in the foregoing method embodiments.

According to a twenty-fourth aspect, this application discloses a computer program product. The computer program product includes computer program code, and when the computer program code is run on a processor, the foregoing methods are performed.

According to a twenty-fifth aspect, this application discloses a chip system. The chip system includes a processor, configured to implement functions in the foregoing methods. In a possible design, the chip system further includes a memory, configured to store program instructions and/or data. The chip system may include a chip, or may include a chip and another discrete component.

According to a twenty-sixth aspect, this application discloses a computer-readable storage medium. The computer-readable storage medium stores a computer program, and when the computer program is run, the foregoing methods are implemented.

Beneficial effects of the tenth aspect to the twenty-sixth aspect are similar to beneficial effects of the corresponding methods in the first aspect to the ninth aspect. For detailed descriptions, refer to the beneficial effects of the corresponding methods.

## BRIEF DESCRIPTION OF DRAWINGS

FIG. 1 is a diagram of a network architecture according to an embodiment of this application;
FIG. 2 is a diagram of an application scenario according to an embodiment of this application;
FIG. 3 is a diagram of another application scenario according to an embodiment of this application;
FIG. 4 is a diagram of still another application scenario according to an embodiment of this application;
FIG. 5 is a diagram of tactile coding of a tactile sensing threshold according to Weber's law according to an embodiment of this application;
FIG. 6 is a diagram of error propagation areas in a case of different $\delta$ according to an embodiment of this application;
FIG. 7 is a diagram of a PDU session, an RB, and a QoS flow according to an embodiment of this application;
FIG. 8 is a schematic flowchart of a communication method according to an embodiment of this application;
FIG. 9 is a diagram of indication information indicating a tactile sensing threshold at a protocol layer according to an embodiment of this application;
FIG. 10 is a diagram in which one data packet corresponds to one tactile flow according to an embodiment of this application;
FIG. 11 is a diagram in which one data packet corresponds to a plurality of tactile flows according to an embodiment of this application;
FIG. 12 is a diagram of a GTP-U packet header according to an embodiment of this application;
FIG. 13 is a diagram of a protocol stack according to an embodiment of this application;
FIG. 14 is a schematic flowchart of another communication method according to an embodiment of this application;
FIG. 15 is a diagram of protocol stacks of an N5 interface and an N33 interface according to an embodiment of this application;
FIG. 16 is a schematic flowchart of still another communication method according to an embodiment of this application;
FIG. 17 is a diagram of a structure of a communication apparatus according to an embodiment of this application;
FIG. 18 is a diagram of a structure of another communication apparatus according to an embodiment of this application; and

FIG. 19 is a diagram of a structure of still another communication apparatus according to an embodiment of this application.

DESCRIPTION OF EMBODIMENTS

Embodiments of this application disclose a communication method and apparatus, to include, in a data packet, indication information indicating a tactile sensing threshold, to ensure matching between the tactile sensing threshold and reliability. The following describes technical solutions in embodiments of this application with reference to accompanying drawings.

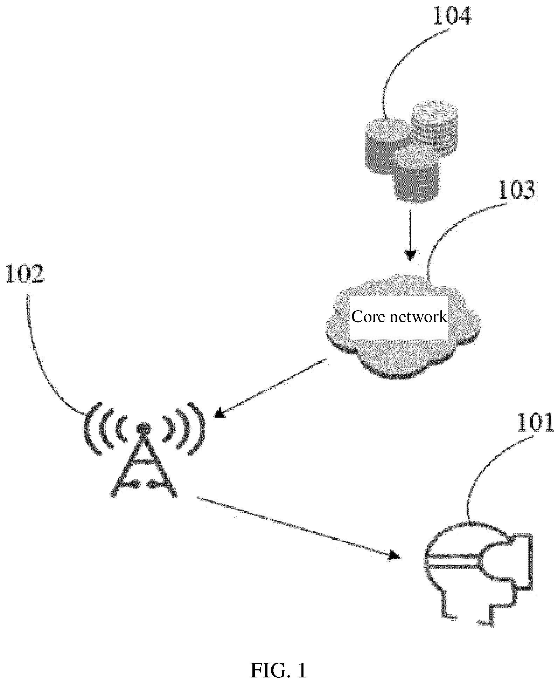

The following first describes a network architecture in embodiments of this application, to better understand embodiments of this application. FIG. 1 is a diagram of a network architecture according to an embodiment of this application. As shown in FIG. 1, the network architecture may include a terminal device 101, an access network device 102, a core network device 103, and a data network (data network, DN) 104.

Transmission from the terminal device 101 to the DN 104 by using the access network device 102 and the core network device 103 is uplink transmission, and transmission from the DN 104 to the terminal device 101 by using the core network device 103 and the access network device 102 is downlink transmission.

The terminal device may be referred to as user equipment (user equipment, UE), a mobile station (mobile station, MS), a mobile terminal (mobile terminal, MT), or the like, and is a device that provides voice and/or data connectivity for a user. The terminal device may be a mobile phone (mobile phone), a handheld terminal, customer premises equipment (customer premises equipment, CPE), a notebook computer, a subscriber unit (subscriber unit), a cellular phone (cellular phone), a smartphone (smartphone), a computing device, a wireless data card, a personal digital assistant (personal digital assistant, PDA) computer, a tablet computer, a computer having a wireless transceiver function, a wireless modem (modem), a tactile terminal device, a handheld (handheld) device, a laptop computer (laptop computer), a session initiation protocol (session initiation protocol, SIP) phone, a cordless phone (cordless phone), or a wireless local loop (wireless local loop, WLL) station, a machine type communication (machine type communication, MTC) terminal, a wearable device (such as a smart watch, a smart band, and a pedometer), a vehicle-mounted terminal device (such as a car, a bicycle, an electric vehicle, an airplane, a ship, a train, and a high-speed train), an XR terminal device, a VR terminal device, an AR terminal device, a wireless terminal in industrial control (industrial control), a smart home device (such as a refrigerator, a TV, an air conditioner, and an electric meter), a smart robot, a workshop device, a wireless terminal in self driving (self driving), a wireless terminal in remote surgery (remote medical surgery), a wireless data card, a wireless terminal in a smart grid (smart grid), a wireless terminal in transportation safety (transportation safety), a wireless terminal in a smart city (smart city), a wireless terminal in a smart home (smart home), a flight device (such as a smart robot, a hot air balloon, an uncrewed aerial vehicle, or an airplane), or another device that can access a network.

In addition, the terminal device may also be a terminal device in a future communication system (for example, a 6th generation (6th generation, 6G) communication system), a terminal device in a future evolved public land mobile network (public land mobile network, PLMN), or the like. For example, a 6G network may further extend a form and a function of a terminal device of 5G communication, and a 6G terminal device includes but is not limited to a vehicle, a cellular network terminal device (integrating a function of a satellite terminal), an uncrewed aerial vehicle, and an internet of things (internet of things, IoT).

The access network device is a radio access network (radio access network, RAN) device or node that provides radio access for the terminal device, has a radio transceiver function, and is mainly responsible for functions such as radio resource management, QoS flow management, and data compression and encryption on an air interface side. The access network device may include various forms of base stations, for example, a macro base station, a micro base station (also referred to as a small cell), a pico base station, a small cell, a relay station, an access point satellite, and a balloon station. The access network device may further include an evolved NodeB (evolved NodeB, eNB, or eNodeB) in long term evolution (long term evolution, LTE). The access network device may further include a next generation NodeB (next generation NodeB, gNB) or a transmission reception point (transmission reception point, TRP) in a 5G network. The access network device may further include a base station evolved after a 3rd generation partnership (3rd generation partnership project, 3GPP), or a base station in the future evolved PLMN, a broadband network service gateway (broadband network gateway, BNG), a 3GPP aggregation switch or a non-3GPP access device, an access point (access point, AP), a transmitting point (transmitting point, TP), a mobile switching center, or the like in a wireless fidelity (wireless fidelity, Wi-Fi) system, or may be a device that undertakes a base station function in device-to-device (device-to-device, D2D), vehicle-to-everything (vehicle-to-everything, V2X), or machine-to-machine (machine-to-machine, M2M) communication, or the like.

The core network device is a device in a core network (core network, CN) that provides service support for the terminal device, and is mainly responsible for registration, call connection, charging, mobility management, and providing functions such as user connection, user management, and service bearer completion, data processing, and routing. The core network device may correspond to different devices in different communication systems, for example, in a 4th generation (4th generation, 4G) communication system, may correspond to one or more of a mobility management entity (mobility management entity, MME), a serving gateway (serving gateway, S-GW), and the like. For another example, in a 5G communication system, the core network device may correspond to one or more network elements of an access and mobility management function (access and mobility management function, AMF) network element, an SMF network element, a UPF network element, and the like. In a next generation communication system or a future communication system, the core network device may correspond to one or more network elements, devices, or entities that provide the service support for the terminal device.

The DN provides, for example, a carrier service, internet access, or a third-party service, including a server. The server is configured to implement encoding, rendering, and the like on a video source.

It should be noted that the network architecture shown in FIG. 1 is not limited to including only the terminal device, the access network device, the core network device, and the DN shown in the figure, and may further include another terminal device, access network device, core network device, and DN that are not represented in the figure. Details are not listed herein in this application.

The following describes an application scenario of this application.

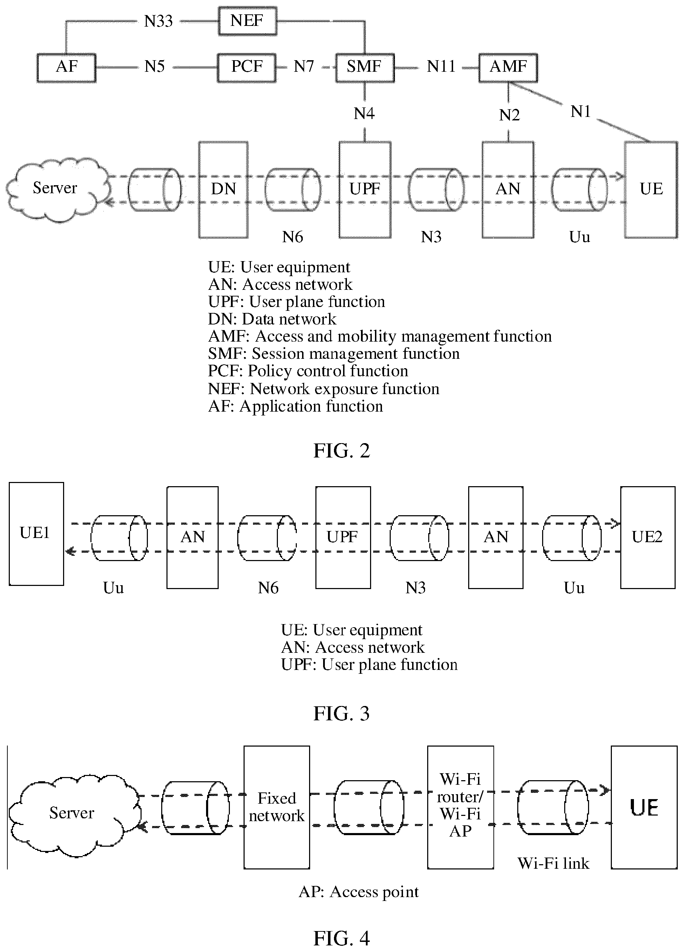

FIG. 2 is a diagram of an application scenario according to an embodiment of this application. As shown in FIG. 2, this application is applicable to a server-network-UE network architecture. A server may perform encoding, decoding, rendering, and the like on a video source. A network is used to perform data transmission, and may include a DN, a core network, and an access network. A terminal device may be a device such as head mounted display XR glasses, a video player, or a holographic projector.

As shown in FIG. 2, a 5G core network may include a UPF network element, an AMF network element, an SMF network element, a policy control function (policy control function, PCF) network element, an application function (application function, AF) network element, an exposure function (network exposure function, NEF) network element, and the like.

The UPF network element is mainly responsible for user plane-related content, for example, data packet routing and transmission, a mobility anchor, an uplink classifier, to support routing of a service flow to a data network and a branching point to support a multihoming protocol data unit (protocol data unit, PDU) session, packet detection, service usage reporting, QoS processing, lawful interception, downlink packet storage, charging information statistics, and the like.

The AMF network element may complete functions related to access and mobility, such as connection management, a registration procedure, mobility management, access authentication and authorization management, reachability management, security context management, and SMF network element selection. In addition, the AMF network element is further responsible for transferring a user policy between the terminal device and the PCF network element.

The SMF network element is mainly responsible for session-related functions such as session management in a mobile network, UPF network element selection and control, service and session continuity (service and session continuity, SSC) mode selection, and roaming. The session management may include session establishment, modification, release, update, and the like. The session management may further include maintenance of a tunnel between the UPF network element and an access network (access network, AN) device.

The PCF network element may be responsible for policy-related functions such as unified policy formulation, policy control provision, and obtaining subscription information related to policy decision from a unified data repository (unified data repository, UDR) network element. The policy control provision may include providing service data flow and application-based detection, gating, QoS, flow-based charging control, and the like.

The AF network element mainly supports interaction with a 3GPP core network to provide a service or a service, to affect service flow routing, access network capability exposure, policy control, and the like, and may interact with the NEF network element, or the like.

The NEF network element is mainly responsible for securely exposing a service and a capability that are provided by a 3GPP network function, including internally exposing the service and the capability, exposing the service and the capability to a third party, or the like, and converting or translating information exchanged with the AF network element and information exchanged with an internal network function, for example, an AF network element service identifier and internal 5G core network information such as a data network name (data network name, DNN), and a single network slice selection assistance information (network slice selection assistance, NSSAI) (single NSSAI, S-NSSAI).

It should be understood that the foregoing is example descriptions of 5G core network elements, and does not constitute a limitation on the 5G core network elements. For example, the 5G core network may further include a unified data management (unified data management, UDM) network element, an authentication server function (authentication server function, AUSF) network element, a network data analytics function (network data analytics function, NWDAF) network element, a network repository function (network repository function, NRF) network element, a service communication agent (service communication proxy, SCP) network element, and the like.

FIG. 3 is a diagram of another application scenario according to an embodiment of this application. As shown in FIG. 3, this application is applicable to a UE-network-UE network architecture. For example, in a tactile internet, one terminal device is an interface between a tactile user and a manual system in a primary domain, and the other terminal device is a remote control robot or a remote operator in a controlled domain. The primary domain receives an audio/video feedback signal from the controlled domain. With the help of various commands and feedback signals, the primary domain and the controlled domain are connected through a bidirectional communication link in a network domain. This forms a global control ring.

It should be understood that FIG. 2 and FIG. 3 are described by using 5G as an example, but do not constitute a limitation thereto. For example, a core network and an access network may also include LTE, a next generation communication system, a future communication system, or the like.

FIG. 4 is a diagram of another application scenario according to an embodiment of this application. As shown in FIG. 4, this application is applicable to a Wi-Fi scenario. For example, a cloud server sends XR media data or a common video to UE (for example, an XR device) by using a fixed network and a Wi-Fi router/AP/set-top box.

It should be understood that FIG. 2 to FIG. 4 are examples for describing application scenarios of this application, and do not constitute a limitation on the application scenarios of this application. For example, the foregoing network architecture may be applied to a narrowband internet of things (narrowband internet of things, NB-IoT) system, a global system for mobile communications (global system for mobile communications, GSM) system, an enhanced data rate for GSM evolution (enhanced data rate for GSM evolution, EDGE) system, a wideband code division multiple access (wideband code division multiple access, WCDMA) system, a code division multiple access 2000 (code division multiple access, CDMA2000) system, a time division-synchronization code division multiple access (time division-synchronization code division multiple access, TD-SCDMA) system, and a communication system like a 6G system evolved after 5G.

The following first describes related technologies in embodiments of this application, to better understand embodiments of this application.

1. Tactile sensing threshold

With further research on tactile coding, there are two types of tactility in the industry. One is kinesthetic sensing, which is represented by muscle, joint, tendon movements, and associated force and torque. The other type is tactile sensing, which is represented by a sensing characteristic of a material surface, such as roughness, friction, softness, hardness, or temperature. For the kinesthetic sensing, a significant difference law in Weber's law (Weber's law) indicates that people can sense a change of the kinesthetic sensing only when there is a significant difference between a current kinesthetic signal and a previous kinesthetic signal. If there is no significant difference between the current kinesthetic signal and the previous kinesthetic signal, the kinesthetic sensing remains unchanged. Such a kinesthetic signal area in which people cannot perceive signal change may be referred to as a sensing coverage hole or a tactile sensing threshold. Adjustment of a size of the sensing coverage hole or adjustment of a value of the tactile sensing threshold can reduce kinesthetic data without affecting user experience. It is assumed that I is used to represent a signal at a current moment, $\Delta I$ represents a change between a signal at a next moment and the signal at the current moment, and $\delta$ represents a sensing coverage hole, that is, a tactile sensing threshold. When $\frac{\Delta I}{I} > \delta$, it indicates that the signal at the next moment is a signal with a significant difference and needs to be sent.

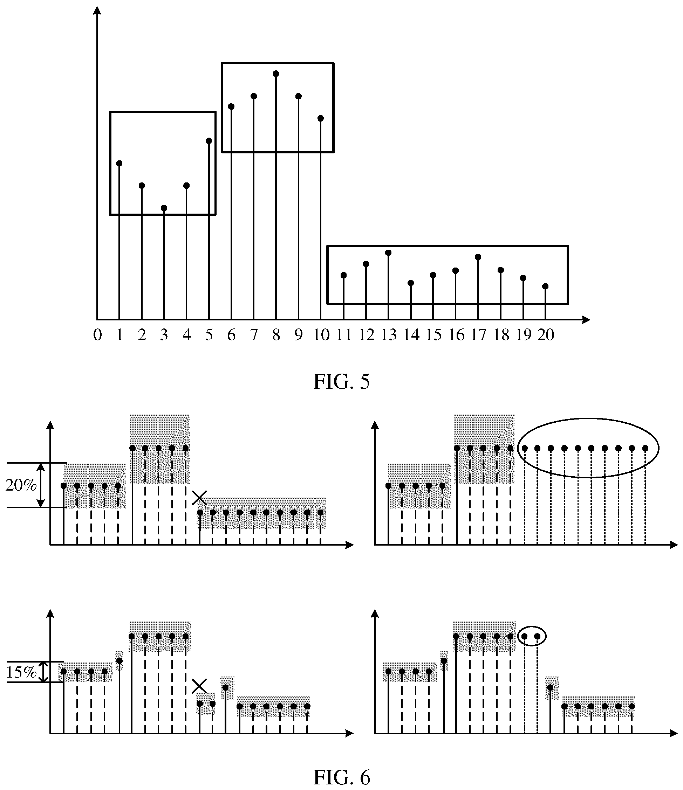

FIG. 5 is a diagram of tactile coding of a tactile sensing threshold according to Weber's law according to an embodiment of this application. As shown in FIG. 5, a horizontal coordinate represents time, and a vertical coordinate represents an amplitude of a signal. A ratio of an absolute value of a difference between an amplitude of a signal at a 2nd moment and an amplitude of a signal at a 1st moment to the amplitude of the signal at the 1st moment is small. In other words, people cannot perceive a tactile change at this time. Therefore, a transmit end does not send the signal at the 2nd moment. Similarly, signals at a 3rd moment, a 4th moment, and a 5th moment are not sent until a signal at a 6th moment is generated. A ratio of an absolute value of a difference between an amplitude of the signal at the 6th moment and the amplitude of the signal at the 1st moment to the amplitude of the signal at the 1st moment is greater than the tactile sensing threshold. In this case, the signal at the 6th moment needs to be sent. For a signal at a subsequent moment, whether the tactile sensing threshold is exceeded is determined with reference to the signal at the 6th moment, until a next signal that exceeds the tactile sensing threshold is generated, that is, a signal generated at an 11th moment.

FIG. 6 is a diagram of error propagation areas in a case of different $\delta$ according to an embodiment of this application. As shown in FIG. 6, when $\delta$ is 20%, a transmit end sends signals at a 1st moment, a 6th moment, and an 11th moment. When a receive end successfully receives the signals at the 1st moment and the 6th moment, but fails to receive the signal at the 11th moment, the receive end can sense only the signal at the 6th moment from the 11th moment to a 20th moment. When $\delta$ is 15%, the transmit end sends signals at the 1st moment, a 5th moment, the 6th moment, the 11th moment, the 13th moment, and the 14th moment. When the receive end fails to receive the signal at the 11th moment but successfully receives the signals at the 13th moment and the 14th moment, the receive end can sense, at the 11th moment and the 12th moment, the signal at the 6th moment, and sense, at the 13th moment, the signal at the 13th moment, and only the 11th and 12th moments are affected. It can be learned that a value of $\delta$ affects an error propagation area. To obtain better experience

when $\delta$ is 20%, higher reliability needs to be ensured, to ensure that all transmitted signals can be successfully transmitted.

It should be noted that there are a plurality of factors that affect the value of $\delta$. A possible factor is that different parts of a user are different in tactile sensitivity, and therefore tactile sensing thresholds are also different. For example, for tactile gloves and a tactile vest, the tactile gloves act on a finger part, and the tactile vest acts on the back. Usually, the fingers are more sensitive than the back, and the tactile sensing threshold is smaller. Therefore, $\delta$ of the finger part is smaller than that of the back. Another possible factor is that an amount of data that can be transmitted varies with channel conditions, and therefore, tactile sensing thresholds may be different. When the channel condition is good, an amount of data that can be transmitted is large, and a signal source may set $\delta$ to a smaller value to obtain better user experience. On the contrary, when the channel condition is poor, an amount of data that can be transmitted is small, and a signal source may set $\delta$ to a larger value to reduce the amount of data to ensure basic user experience.

It can be learned from the foregoing analysis that, a larger value of $\delta$ indicates a smaller amount of data that needs to be transmitted, a larger error propagation area, and a higher transmission reliability requirement; and a smaller value of $\delta$ indicates a larger amount of data that needs to be transmitted, a smaller error propagation area, and a lower transmission reliability requirement.

2. QoS

Currently, a QoS guarantee mechanism in 5G communication includes a QoS flow (flow) that supports a guaranteed flow bit rate (guaranteed bit rate, GBR) and a non-GBR (non-GBR) QoS flow.

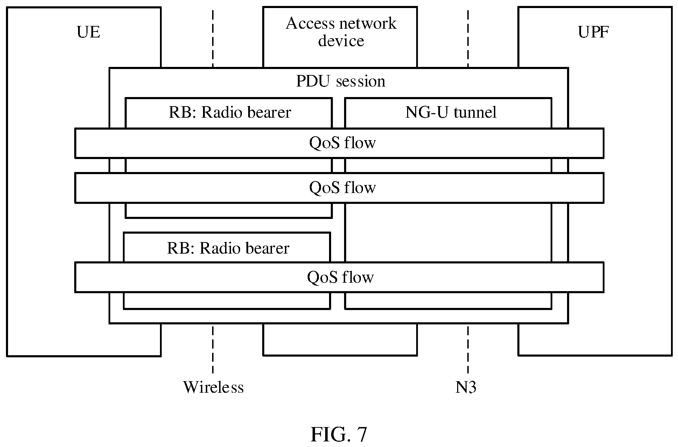

In a PDU session (session), a QoS flow is a minimum granularity for QoS differentiation. In a 5G system, a QoS flow identifier (QoS flow identifier, QFI) is used to identify a QoS flow, and a QFI is unique in one PDU session. In other words, one PDU session may have a plurality of (a maximum of 64) QoS flows, but each QoS flow has a different QFI. In one PDU session, user plane service flows with a same QFI use a same service forwarding processing manner (for example, scheduling). FIG. 7 is a diagram of a PDU session, a radio bearer (radio bearer, RB), and a QoS flow according to an embodiment of this application. As shown in FIG. 7, at a configuration granularity, one PDU session may correspond to a plurality of RBs, and services on a same RB may also use different service classes, that is, QoS flows. One RB may further include a plurality of QoS flows, and a QoS configuration is at a QoS flow level.

In a 5G system (5G system, SGS), the QoS flow is controlled by an SMF network element in a core network, and may be preconfigured or established and modified by using a PDU session. A configuration of one QoS flow may include a PDR of a UPF network element and a QoS profile (profile) of an access network device.

The PDR of the UPF network element may include an uplink PDR and a downlink PDR, and these PDRs are provided by the SMF network element through an N4 interface. For an internet protocol version (internet protocol version, IPv) 4 or IPv6 or IPv4v6 PDU session, the PDR may include CN tunnel information (tunnel info), a network instance (network instance), a QFI, an internet protocol (internet protocol, IP) packet filter set (packet filter set), and an application identifier (application identifier). The CN tunnel information may be a core network address of an N3/N9 tunnel corresponding to the PDU session. The network instance is identification information of a domain, and is used for traffic detection and routing in the UPF network element. The IP packet filter set may include a series of parameters related to IP packet filtering. The application identifier is an index of an application detection rule set configured in the UPF network element. For an Ethernet PDU session, the PDR may include CN tunnel information, a network instance, a QFI, and an Ethernet packet filter set (Ethernet packet filter set). The Ethernet packet filter set may include a series of parameters related to Ethernet packet filtering.

The QoS profile of the access network device may be provided by the SMF network element through an N2 interface between an AMF network element and the access network device, or may be preconfigured. Information included in the QoS profile may be shown in Table 1.

**Table 1 Information included in a QoS profile**

| QoS flow attribute | Description |
| --- | --- |
| 5G QoS identifier (5G QoS identifier, 5QI) | The 5G QoS identifier indicates a radio characteristic of a QoS flow. |
| Allocation and retention priority (allocation and retention priority, ARP) | The allocation and retention priority is a priority of the QoS flow on a next generation (next generation, NG) interface, and can be used between different UEs or between QoS flows on a UE. |
| Reflective QoS attribute (reflective QoS attribute, RQA) | The reflective QoS attribute indicates whether uplink complies with mirroring mapping, and is available only for a non-GBR QoS flow. |
| Guaranteed flow bit rate (guaranteed flow bit rate, GFBR) | The guaranteed flow bit rate is a guaranteed data rate, is available only for a GBR QoS flow, and includes uplink and downlink guaranteed flow bit rates. |

(continued)

| QoS flow attribute | Description |
|---|---|
| Maximum flow bit rate (maximum flow bit rate, MFBR) | The maximum flow bit rate is a maximum data rate, is available only for the GBR QoS flow, and includes uplink and downlink maximum flow bit rates. |
| Notification control (notification control) | The notification control indicates whether an access network reports a QoS to a core network when the QoS cannot be met, is available only for the GBR QoS flow, and is optional. |
| Maximum packet loss rate (maximum packet loss rate, MPLR) | The maximum packet loss rate indicates a maximum packet loss rate that can be tolerated by a QoS flow, and can be provided only on the GBR QoS flow. |

Whether a QoS flow configured in a QoS profile is a "GBR" QoS flow or a "non-GBR" QoS flow depends on the QoS profile of the QoS flow. A QoS profile of each QoS flow includes the 5QI and the ARP. A QoS profile of each non-GBR QoS flow may further include the RQA. A QoS profile of each GBR QoS flow may further include the GFBR and the MFBR. The QoS profile of each GBR QoS flow may further include the indication control and the MPLR.

It can be learned that when a tactile sensing threshold does not match reliability, either transmission reliability is low, or a resource waste is caused due to a large amount of transmitted information. However, existing configuration information of the QoS flow does not include the tactile sensing threshold. Therefore, how to ensure matching between the tactile sensing threshold and the reliability is extremely important.

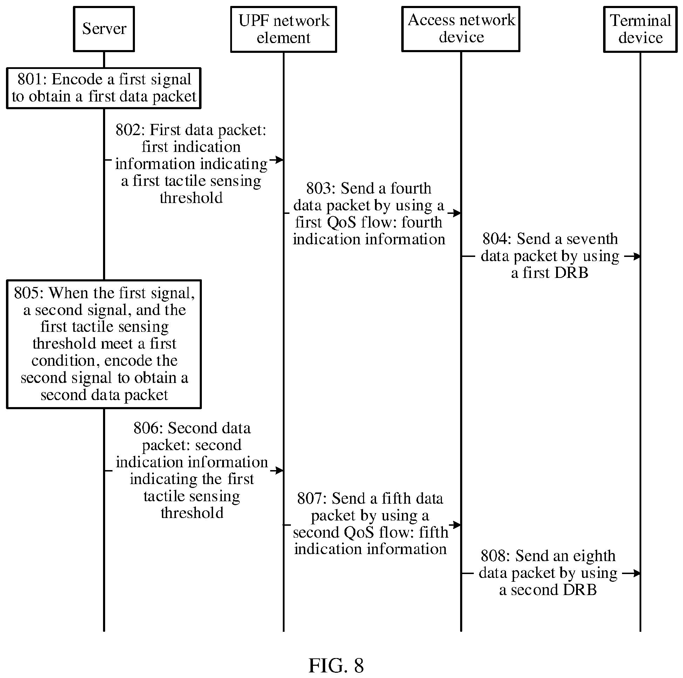

Based on the foregoing network architecture, FIG. 8 is a schematic flowchart of a communication method according to an embodiment of this application. In FIG. 8, an example in which a server, a UPF network element, an access network device, and a terminal device are used as execution entities of the interaction illustration is used for illustrating the method. However, this application does not limit the execution entity of the interaction illustration. For example, the server in FIG. 8 may alternatively be a chip, a chip system, or a processor that supports the server in implementing the method, or may be a logical module or software that can implement all or some functions of the server. The UPF network element in FIG. 8 may alternatively be a chip, a chip system, or a processor that supports the UPF network element in implementing the method, or may be a logical module or software that can implement all or some functions of the UPF network element. The access network device in FIG. 8 may alternatively be a chip, a chip system, or a processor that supports the access network device in implementing the method, or may be a logical module or software that can implement all or some functions of the access network device. The terminal device in FIG. 8 may alternatively be a chip, a chip system, or a processor that supports the terminal device in implementing the method, or may be a logical module or software that can implement all or some functions of the terminal device. As shown in FIG. 8, the communication method may include the following steps.

801: The server encodes a first signal to obtain a first data packet.

The server may encode the first signal to obtain the first data packet, where the first data packet may include first indication information indicating a first tactile sensing threshold. In other words, the server may encode the first signal based on the first tactile sensing threshold to obtain the first data packet.

The first signal may be a signal collected at a first contact. The first contact may be any contact on a first tactile device. The first tactile device may be any tactile device of one or more tactile devices that establish a connection to the server. The tactile device may be a device that can collect a tactile signal, such as tactile gloves and a tactile vest. The contact may be a point or an area on the tactile device at or in which a signal can be collected. Each contact may correspond to one tactile flow (namely, a signal flow). One tactile flow is a signal or data collected at one contact. Each tactile flow may correspond to a plurality of signals. The plurality of signals are signals collected at the contact at different time or sampling time.

The first signal may be a $1^{st}$ signal collected at the first contact, or may not be a $1^{st}$ signal collected at the first contact.

The first data packet may be a data packet at a transport layer. The transport layer may be a transmission control protocol (transmission control protocol, TCP) layer, or may be another transport layer. This is not limited herein. Correspondingly, the first indication information may be encapsulated at the transport layer. For example, the first indication information may be encapsulated in an extension header field of an IPv4 or IPv6 protocol.

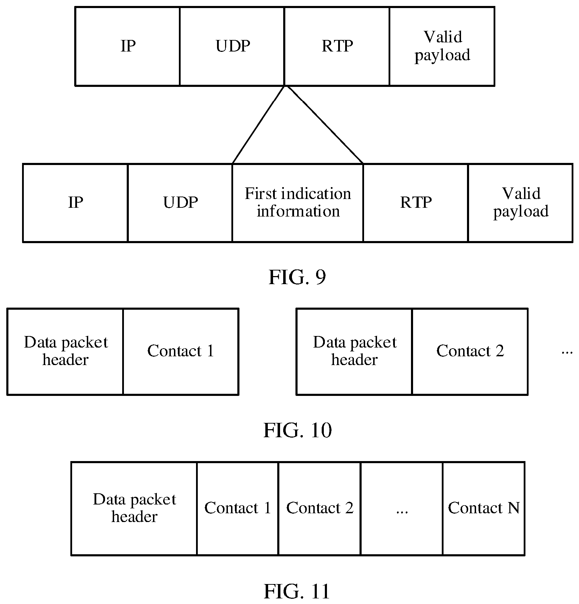

The first data packet may alternatively be a data packet at a protocol layer. The protocol layer may be an existing protocol layer, such as a real-time transport protocol (real-time transport protocol, RTP) layer, an IP layer, or a user datagram protocol (user datagram protocol, UDP) layer. The protocol layer may alternatively be a newly defined protocol layer. Correspondingly, the first indication information may be encapsulated at the protocol layer. For example, FIG. 9 is a diagram of indication information indicating a tactile sensing threshold at a protocol layer according to an embodiment of this application. As shown in FIG. 9, the first indication information may be encapsulated at a newly defined protocol layer between a UPD layer and an RTP layer. The newly defined protocol layer may be named as a tactile sensing threshold layer, or may be named as another layer. This is not limited herein. Data is in a valid payload (payload).

The first data packet may correspond to one tactile flow. In other words, the first data packet corresponds to one contact, to be specific, the first data packet is obtained by encoding a signal collected at one contact. The tactile flow is a tactile flow corresponding to the first contact. It can be learned that signals corresponding to different tactile flows may be separately encapsulated in different data packets for transmission, to be specific, signals collected at different contacts may be separately encapsulated in different data packets for transmission, in other words, one data packet is obtained by encoding a signal collected at only one contact.

FIG. 10 is a diagram in which one data packet corresponds to one tactile flow according to an embodiment of this application. As shown in FIG. 10, each data packet corresponds to one tactile flow (that is, one contact), and the tactile flow may be identified by using information about the contact. The information about the contact may be a number of the contact, may be an index of the contact, or may be other information that can uniquely identify the contact.

The first data packet may alternatively correspond to a plurality of tactile flows. In other words, the first data packet corresponds to a plurality of contacts, to be specific, the first data packet is obtained by encoding signals collected at the plurality of contacts. The plurality of tactile flows may include a tactile flow corresponding to the first contact. It can be learned that signals corresponding to the plurality of tactile flows may be encapsulated into one data packet for transmission, to be specific, the signals collected at the plurality of contacts may be encapsulated into one data packet for transmission, in other words, one data packet may be obtained by encoding the signals collected at the plurality of contacts.

FIG. 11 is a diagram in which one data packet corresponds to a plurality of tactile flows according to an embodiment of this application. As shown in FIG. 11, each data packet corresponds to N tactile flows (that is, N contacts). N is an integer greater than 1.

When the first data packet corresponds to one tactile flow, the first tactile sensing threshold may be a tactile sensing threshold corresponding to the tactile flow. In this case, each tactile flow corresponds to one tactile sensing threshold, and the first tactile sensing threshold is a current tactile sensing threshold of the first contact, that is, a current sensing threshold of the first contact. Tactile sensing thresholds corresponding to different tactile flows may be the same or may be different.

When the first data packet corresponds to a plurality of tactile flows, the first tactile sensing threshold may be a tactile sensing threshold corresponding to the plurality of tactile flows.

In one case, each tactile flow of the plurality of tactile flows may correspond to one tactile sensing threshold. A plurality of tactile sensing thresholds corresponding to the plurality of tactile flows may be different, may be partially the same and partially different, or may be all the same.

The first tactile sensing threshold may be a maximum tactile sensing threshold in the plurality of tactile sensing thresholds, so that reliability of all tactile flows can be ensured. Alternatively, the first tactile sensing threshold may be a minimum tactile sensing threshold in the plurality of tactile sensing thresholds, so that transmission efficiency of all tactile flows can be ensured. Alternatively, the first tactile sensing threshold may be an average value of the plurality of tactile sensing thresholds, may be a median of the plurality of tactile sensing thresholds, may be a tactile sensing threshold greater than X% of the plurality of tactile sensing thresholds, or may be a tactile sensing threshold less than Y% of the plurality of tactile sensing thresholds, so that reliability and transmission efficiency of all tactile flows may be comprehensively considered.

The median of the plurality of tactile sensing thresholds may be understood as a value in the middle of the plurality of tactile sensing thresholds. For example, it is assumed that the first data packet corresponds to five tactile flows, the five tactile flows correspond to five different tactile sensing thresholds, the five tactile sensing thresholds are arranged as A1, A2, A3, A4, and A5 in descending order or ascending order, and a median of the five tactile sensing thresholds is A3. For example, it is assumed that the first data packet corresponds to six tactile flows, the six tactile flows correspond to six different tactile sensing thresholds, the six tactile sensing thresholds are arranged as A1, A2, A3, A4, A5 and A6 in descending order or ascending order, and a median of the six tactile sensing thresholds is (A3+A4)/2.

The tactile sensing threshold greater than X% of the plurality of tactile sensing thresholds may be understood as a tactile sensing threshold that is greater than X% of the plurality of tactile sensing thresholds. For example, it is assumed that the first data packet corresponds to five tactile flows, the five tactile flows correspond to five different tactile sensing thresholds, the five tactile sensing thresholds are arranged as A1, A2, A3, A4, and A5 in descending order or ascending order, and X is 30. In this case, the first tactile sensing threshold is A2. For example, it is assumed that the first data packet corresponds to 10 tactile flows, the 10 tactile flows correspond to 10 different tactile sensing thresholds, the 10 tactile sensing thresholds are arranged as A1, A2, A3, A4, A5, A6, A7, A8, A9, and A10 in descending order or ascending order, and X is 30. In this case, the first tactile sensing threshold is A4.

The tactile sensing threshold less than Y% of the plurality of tactile sensing thresholds may be understood as a tactile sensing threshold that is less than Y% of the plurality of tactile sensing thresholds. For example, it is assumed that the first data packet corresponds to five tactile flows, the five tactile flows correspond to five different tactile sensing thresholds, the five tactile sensing thresholds are arranged as A1, A2, A3, A4, and A5 in descending order or ascending order, and X is 70. In this case, the first tactile sensing threshold is A3. For example, it is assumed that the first data packet corresponds to 10 tactile flows, the 10 tactile flows correspond to 10 different tactile sensing thresholds, the 10 tactile sensing thresholds are arranged as A1, A2, A3, A4, A5, A6, A7, A8, A9, and A10 in descending order or ascending order, and Y is 70. In this case, the first tactile sensing threshold is A6.

In another case, the plurality of tactile flows may correspond to one tactile sensing threshold, in other words, the plurality of tactile flows correspond to only one tactile sensing threshold. In this case, the first tactile sensing threshold is the tactile sensing threshold.

Optionally, a tactile sensing threshold of a contact may be fixed. In this case, each contact may correspond to a fixed tactile sensing threshold, and the tactile sensing threshold of the contact does not change with time, a channel status (that is, a channel condition), and the like. Tactile sensing thresholds corresponding to different contacts may be the same or may be different. A correspondence between a contact and a tactile sensing threshold may be shown in Table 2 or Table 3.

**Table 2**

| Information about a contact | Tactile sensing threshold |
|---|---|
| Contact 1 | Threshold 1 |
| Contact 2 | Threshold 2 |
| Contact 3 | Threshold 3 |
| ... | ... |
| Contact M | Threshold M |

**Table 3**

| Information about a contact | Tactile sensing threshold |
|---|---|
| Contact 1 | Threshold 1 |
| Contact 2 | |
| Contact 3 | Threshold 2 |
| ... | ... |
| Contact M | Threshold K |

K is an integer greater than 0, and M is an integer greater than K.

It should be understood that Table 2 and Table 3 are examples for description of the correspondence between the contact and the tactile sensing threshold, and do not constitute a limitation on the correspondence.

Optionally, the tactile sensing threshold of the contact may be variable. The tactile sensing threshold of the contact may be determined based on one or more pieces of information such as sensitivity of the contact, the channel status, performance of a tactile device, and capability information of a terminal device.

Different contacts may be used to collect signals of different body parts of a person, and sensitivity of different body parts of the person may be different. Different contacts may alternatively correspond to different positions of a same body part of the person, and sensitivity of different positions may be different. Therefore, sensitivity of different contacts may be different.

When a channel is busy, or the channel condition is poor or bad, an amount of data that can be transmitted through the channel is small, and the tactile sensing threshold should not be excessively large. When the channel is idle or the channel condition is good, an amount of data that can be transmitted through the channel is large, and the tactile sensing threshold may be set to a small value. Therefore, different channel statuses may cause different tactile sensing thresholds.

When the performance of the tactile device is good, sensitivity of the tactile device may be good, a large quantity of signals may be collected, and the tactile sensing threshold may be set to a small value. When the performance of the tactile device is poor, the sensitivity of the tactile device may be poor, a small quantity of signals may be collected, and the tactile sensing threshold needs to be set to a large value. Therefore, different performance of the tactile device may cause different tactile sensing thresholds.

When a capability of the terminal device is strong, a rendering capability of the terminal device is strong, and the tactile sensing threshold may be set to a small value. When the capability of the terminal device is weak, the rendering capability of the terminal device is weak, and the tactile sensing threshold may be set to a large value. Therefore, different capability information of the terminal device may cause different tactile sensing thresholds.

It can be learned that if one or more pieces of information such as the sensitivity of the contact, the channel status, the performance of the tactile device, and the capability information of the terminal device are different, tactile sensing thresholds of the contact may be different. Therefore, the first tactile sensing threshold may be determined based on one or more pieces of information such as sensitivity of the first contact, a current channel status, performance of a tactile device corresponding to the first contact, and the capability information of the terminal device. The terminal device herein is a target terminal device of a first signal.

Optionally, the first indication information may be a quantized first tactile sensing threshold. A tactile sensing threshold may be quantized by using L bits (bits).

For example, when the tactile sensing threshold is 0.1, 0.1 may be quantized by using eight bits 00001010. 00001010 is 10, and represents a value of a denominator. In this case, a value of a numerator is 1 by default.

Particularly, when L is 1, the tactile sensing threshold may be 0 or 1. When the tactile sensing threshold is 0, it may indicate that a signal source does not send a signal based on the tactile sensing threshold. When the tactile sensing threshold is 1, it may indicate that the signal source sends the signal based on the tactile sensing threshold.

It should be understood that the foregoing is an example for description of quantizing the tactile sensing threshold by using L bits, and does not limit a manner of quantizing the tactile sensing threshold.

Optionally, the first indication information may be an index of the first tactile sensing threshold.

Different tactile sensing thresholds may correspond to different indexes, and the tactile sensing thresholds may be in one-to-one correspondence with the indexes. For example, when a quantity of tactile sensing thresholds is 32, indexes of the tactile sensing thresholds are also 32, and 5 bits may be used to represent the index of the tactile sensing threshold. The 32 tactile sensing thresholds and corresponding indexes may be shown in Table 4.

**Table 4 Tactile sensing threshold and corresponding index**

| Index | Tactile sensing threshold |
|-------|---------------------------|
| 00000 | 0 |
| 00001 | 0.01 |
| 00010 | 0.02 |
| 00011 | 0.03 |
| 00100 | 0.04 |
| 00101 | 0.05 |
| 00110 | 0.06 |
| 00111 | 0.07 |
| 01000 | 0.08 |
| 01001 | 0.09 |
| 01010 | 0.10 |
| 01011 | 0.11 |
| 01100 | 0.12 |
| 01101 | 0.13 |
| 01110 | 0.14 |
| 01111 | 0.15 |
| 10000 | 0.16 |
| 10001 | 0.17 |
| 10010 | 0.18 |
| 10011 | 0.19 |
| 10100 | 0.20 |
| 10101 | 0.21 |
| 10110 | 0.22 |
| 10111 | 0.23 |

(continued)

| Index | Tactile sensing threshold |
|-------|---------------------------|
| 11000 | 0.24 |
| 11001 | 0.25 |
| 11010 | 0.26 |
| 11011 | 0.27 |
| 11100 | 0.28 |
| 11101 | 0.29 |
| 11110 | 0.30 |
| 11111 | 0.31 |

As shown in Table 4, when the first tactile sensing threshold is 0.01, the first indication information may be 00001.

It should be understood that Table 4 is an example for description of the tactile sensing threshold and the index, and does not constitute a limitation on the tactile sensing threshold and the index. For example, the quantity of tactile sensing thresholds may be another value, for example, 20 or 16, and bits needed by corresponding indexes may be 5, 4, or the like. For another example, a value of the tactile sensing threshold may be another value.

802: The server sends the first data packet to the UPF network element.

Correspondingly, the UPF network element receives the first data packet from the server.

The server may send the first data packet to the UPF network element through an N6 interface. Correspondingly, the UPF network element may receive the first data packet from the server through the N6 interface.

803: The UPF network element sends a fourth data packet to the access network device by using a first QoS flow.

Correspondingly, the access network device receives the fourth data packet from the UPF network element by using the first QoS flow.

The UPF network element may determine the fourth data packet based on the first data packet, may determine the first QoS flow based on the first tactile sensing threshold, and then may send the fourth data packet to the access network device by using the first QoS flow. The fourth data packet may include fourth indication information indicating the first tactile sensing threshold. The fourth indication information and the first indication information may be the same or may be different. For detailed descriptions of the fourth indication information, refer to the descriptions of the first indication information in step 801.

The first QoS flow may be a QoS flow corresponding to the first tactile sensing threshold, so that transmission of a data packet by using a corresponding QoS flow can be ensured, to ensure matching between the tactile sensing threshold and reliability.

The UPF network element may determine, based on a correspondence between a tactile sensing threshold and a QoS flow, the first QoS flow corresponding to the first tactile sensing threshold. For example, the correspondence between the tactile sensing threshold and the QoS flow may be shown in Table 5 or Table 6.

Table 5

| Tactile sensing threshold | 5QI value |
|---------------------------|-----------|
| Tactile sensing threshold 1 | Value 1 |
| Tactile sensing threshold 2 | Value 2 |
| Tactile sensing threshold 3 | Value 2 |
| ... | ... |
| Tactile sensing threshold A1 | Value A2 |

Table 6

| Tactile sensing threshold | 5QI value |
|---------------------------|-----------|
| (0, tactile sensing threshold 1] | Value 1 |
| [Tactile sensing threshold 1, tactile sensing threshold 2) | Value 2 |
| [Tactile sensing threshold 2, tactile sensing threshold 3) | Value 3 |

(continued)

| Tactile sensing threshold | 5QI value |
|---|---|
| ... | ... |
| [Tactile sensing threshold A3, A4) | Value A5 |
| ... | ... |

As shown in Table 5 or Table 6, one tactile sensing threshold may correspond to one 5QI value, or one tactile sensing threshold interval may correspond to one 5QI value.

It should be understood that the foregoing is an example for description of the correspondence between the tactile sensing threshold and the QoS flow, and does not constitute a limitation on the correspondence.

Optionally, the UPF network element may first determine a first PER based on the first tactile sensing threshold, and then may determine the first QoS flow based on the first PER. It can be learned that the first tactile sensing threshold corresponds to the first PER, and the first PER corresponds to the first QoS flow. For example, a PER in the 5QI table may be set to a function or a table of the tactile sensing threshold and the PER, so that the first PER may be determined based on the first tactile sensing threshold and the function or the table, and the first PER may be used to determine the first QoS flow.

The UPF network element may determine, based on a correspondence between the tactile sensing threshold and the PER, the first PER corresponding to the first tactile sensing threshold. For example, the correspondence between the tactile sensing threshold and the PER may be shown in Table 7 or Table 8.

**Table 7**

| Tactile sensing threshold | PER |
|---|---|
| Tactile sensing threshold 1 | PER 1 |
| Tactile sensing threshold 2 | PER 2 |
| Tactile sensing threshold 3 | PER 2 |
| ... | ... |
| Tactile sensing threshold B1 | PER B2 |

**Table 8**

| Tactile sensing threshold | PER |
|---|---|
| (0, tactile sensing threshold 1] | PER 1 |
| [Tactile sensing threshold 1, tactile sensing threshold 2) | PER 2 |
| [Tactile sensing threshold 2, tactile sensing threshold 3) | PER 3 |
| ... | ... |
| [Tactile sensing threshold B3, B4) | PER B5 |
| ... | ... |

As shown in Table 7 or Table 8, one tactile sensing threshold may correspond to one PER, or one tactile sensing threshold interval may correspond to one PER.

It should be understood that the foregoing is an example for description of the correspondence between the tactile sensing threshold and the PER, and does not constitute a limitation on the correspondence.

The UPF network element may determine, based on a correspondence between a PER and a QoS flow, the first QoS flow corresponding to the first PER. For the correspondence between the PER and the QoS flow, refer to an existing 5QI table. Details are not described herein again.

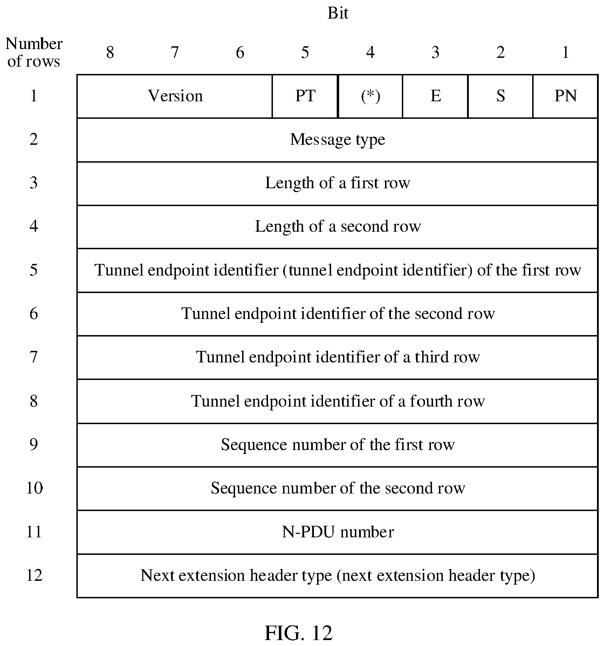

The fourth data packet may be a GTP-U data packet, and a packet header of the GTP-U data packet may include the fourth indication information. FIG. 12 is a diagram of a GTP-U packet header according to an embodiment of this application. As shown in FIG. 12, a first row of the GTP-U packet header includes eight bits, and the first bit is a network (network, N)-PDU number flag (N-PDU number flag, PN), identifying whether the PN exists. The second bit is an extension header flag (extension header flag, E), identifying whether the E exists. The third bit is a sequence number flag (sequence number flag, S), identifying whether the S exists. The fourth bit (bit) is an idle bit. The fifth bit indicates a protocol type (protocol type, PT). The sixth bit to the eighth bit indicate a version (version). A second row indicates a message type (message type). An eleventh row is an N-PDU number, and a twelfth row is an extension header (extension header).

The GTP-U packet header may include the fourth indication information in a plurality of manners. For example, the fourth indication information may be carried by using the message type in the second row. For example, the fourth indication information may be added to the extension header in the twelfth row. It should be understood that the foregoing is an example for description that the GTP-U packet header includes the fourth indication information, and does not constitute a limitation on the fourth indication information.

804: The access network device sends a seventh data packet to the terminal device by using a first DRB.

Correspondingly, the terminal device receives the seventh data packet from the access network device by using the first DRB.

The access network device may determine the seventh data packet based on the fourth data packet, may determine the first DRB based on the first QoS flow, and then may send the seventh data packet to the terminal device by using the first DRB.

The access network device may determine, based on a correspondence between a DRB and a QoS flow, the first DRB corresponding to the first QoS flow. For example, the correspondence between the DRB and the QoS flow may be shown in Table 9.

**Table 9**

| DRB information | 5QI value |
|---|---|
| DRB 1 | Value 1 |
| DRB 2 | Value 2 |
| DRB 3 | Value 2 |
| ... | ... |
| DRB C1 | Value C2 |

As shown in Table 9, one DRB may correspond to one 5QI value, or may correspond to a plurality of 5QI values. It can be learned that one DRB may correspond to one QoS flow, or may correspond to a plurality of QoS flows.

It should be understood that the foregoing is an example for description of the correspondence between the DRB and the QoS flow, and does not constitute a limitation on the correspondence.

Optionally, the access network device may first determine a first resource, and then may send the seventh data packet to the terminal device by using the first resource.

In a case, the access network device may determine the first resource based on the first tactile sensing threshold. It can be learned that the access network device may schedule a data packet based on a tactile sensing threshold, to ensure matching between the tactile sensing threshold and reliability.

In another case, the access network device may determine the first resource based on QoS corresponding to the first tactile sensing threshold. For a manner in which the access network device determines the QoS corresponding to the first tactile sensing threshold, refer to related descriptions in step 803.

Optionally, the access network device may first determine whether to perform packet discarding processing on the fourth data packet. For example, when the first tactile sensing threshold is greater than or equal to T, the packet discarding processing may not be performed on the fourth data packet. Even if transmission exceeds a delay budget, rendering cannot be performed at a current moment, but can be performed at a subsequent moment, to avoid an excessively large error propagation area. When the first tactile sensing threshold is less than T, the packet discarding processing may be performed on the fourth data packet, so that a data transmission amount can be reduced, thereby reducing transmission resources. T is a specified or determined threshold, and a value of T and a determining manner are not limited.

805: When the first signal, a second signal, and the first tactile sensing threshold meet a first condition, the server encodes the second signal to obtain a second data packet.

After the first data packet is sent, the server may determine, based on the first signal and the first tactile sensing threshold, a next signal that needs to be sent and that is in signals collected at the first contact. The server may first determine whether the first signal, the second signal, and the first tactile sensing threshold meet the first condition. When the first signal, the second signal, and the first tactile sensing threshold meet the first condition, the server may encode the second signal to obtain the second data packet. When the first signal, the second signal, and the first tactile sensing threshold do not meet the first condition, the server may discard the second signal.

The first condition may include at least one of the following: A ratio of an absolute value of a difference between the second signal and the first signal to the first signal is greater than or equal to the first tactile sensing threshold; the absolute value of the difference between the second signal and the first signal is greater than or equal to the first tactile sensing threshold; a ratio of the second signal to the first signal is greater than or equal to the first tactile sensing threshold; a ratio of the first signal to the second signal is greater than or equal to the first tactile sensing threshold; the ratio of the second signal to the first signal is less than or equal to the first tactile sensing threshold; and the ratio of the first signal to the second signal is less than or equal to the first tactile sensing threshold.

For example, when the first signal is less than the second signal, the first condition may be that the ratio of the second signal to the first signal is greater than or equal to a tactile sensing threshold 1. When the first signal is greater than the second signal, the first condition may be that the ratio of the second signal to the first signal is less than or equal to a tactile sensing threshold 2. For example, when the first signal is less than the second signal, the first condition may be that the ratio of the first signal to the second signal is less than or equal to a tactile sensing threshold 3. When the first signal is greater than the second signal, the first condition may be that the ratio of the first signal to the second signal is greater than or equal to a first tactile sensing threshold 4.

It should be understood that the first signal and the second signal refer to an amplitude of the first signal and an amplitude of the second signal.

The second data packet may include second indication information indicating the first tactile sensing threshold. The first signal and the second signal correspond to a same tactile flow, that is, the first signal and the second signal are different signals collected at a same contact. The first indication information and the second indication information may be the same or may be different. For detailed descriptions of the second data packet, refer to the descriptions of the first data packet in step 801. For detailed descriptions of the second indication information, refer to the descriptions of the first indication information in step 801.

The second signal may be a next signal that is adjacent to the first signal and that is in the signals collected at the first contact. Alternatively, the second signal may be a signal that is not adjacent to the first signal and that is in the signals collected at the first contact after the first signal. In this case, a signal between the first signal and the second signal is not sent because the first condition is not met.

806: The server sends the second data packet to the UPF network element.

Correspondingly, the UPF network element receives the second data packet from the server.

The server may send the second data packet to the UPF network element through the N6 interface. Correspondingly, the UPF network element may receive the second data packet from the server through the N6 interface.

807: The UPF network element sends a fifth data packet to the access network device by using a second QoS flow.

Correspondingly, the access network device receives the fifth data packet from the UPF network element by using the second QoS flow.

The UPF network element may determine the fifth data packet based on the second data packet, may determine the second QoS flow based on the first tactile sensing threshold, and then may send the fifth data packet to the access network device by using the second QoS flow. The fifth data packet may include fifth indication information indicating the first tactile sensing threshold. The fifth indication information and the second indication information may be the same or may be different. For detailed descriptions of the fifth indication information, refer to the descriptions of the first indication information in step 801. For detailed descriptions of the fifth data packet, refer to the descriptions of the fourth data packet in step 803.

The second QoS flow is a QoS flow corresponding to the first tactile sensing threshold. The first QoS flow and the second QoS flow may be the same or may be different. The UPF network element may first determine a second PER based on the first tactile sensing threshold, and then may determine the second QoS flow based on the second PER. The first PER and the second PER may be the same or may be different. For detailed descriptions, refer to the corresponding descriptions in step 803.

808: The access network device sends an eighth data packet to the terminal device by using a second DRB.

Correspondingly, the terminal device receives the eighth data packet from the access network device by using the second DRB.

The access network device may determine the eighth data packet based on the fifth data packet, may determine the second DRB based on the second QoS flow, and then may send the eighth data packet to the terminal device by using the second DRB. The first DRB and the second DRB may be the same or may be different. For detailed descriptions, refer to the corresponding descriptions in step 804.

Optionally, the access network device may first determine a second resource, and then may send the eighth data packet to the terminal device by using the second resource. In a case, the access network device may determine the second resource based on the first tactile sensing threshold. In another case, the access network device may determine the second resource based on the QoS corresponding to the first tactile sensing threshold. It can be learned that the access network device may schedule the data packet based on the tactile sensing threshold, to ensure matching between the tactile sensing threshold and reliability. For detailed descriptions, refer to the corresponding descriptions in step 804.

When a tactile sensing threshold of a contact changes, the server may determine a tactile sensing threshold of the first contact periodically or in real time. After the server sends the second data packet to the UPF network element, when the determined tactile sensing threshold of the first contact is a second tactile sensing threshold, in other words, when the determined tactile sensing threshold of the first contact is different from a previous first tactile sensing threshold, the server may determine, based on the second signal and the second tactile sensing threshold, a next signal that needs to be sent and that is in the signals collected at the first contact. The server may first determine whether the second signal, a third signal, and the second tactile sensing threshold meet a second condition. When the second signal, the third signal, and the second tactile sensing threshold meet the second condition, the third signal may be encoded to obtain a third data packet. When the second signal, the third signal, and the second tactile sensing threshold do not meet the second condition, the third signal may be discarded. For detailed descriptions of the second tactile sensing threshold, refer to related descriptions of the first tactile sensing threshold in step 801. For detailed descriptions of the third signal, refer to related descriptions of the second signal in step 805. For detailed descriptions of the third data packet, refer to related descriptions of the first data packet in step 801.

The second condition may include at least one of the following: A ratio of an absolute value of a difference between the third signal and the second signal to the second signal is greater than or equal to the second tactile sensing threshold; the absolute value of the difference between the third signal and the second signal is greater than or equal to the second tactile sensing threshold; a ratio of the third signal to the second signal is greater than or equal to the second tactile sensing threshold; a ratio of the second signal to the third signal is greater than or equal to the second tactile sensing threshold; the ratio of the third signal to the second signal is less than or equal to the second tactile sensing threshold; and the ratio of the second signal to the third signal is less than or equal to the second tactile sensing threshold. For detailed descriptions of the second condition, refer to related descriptions of the first condition in step 805.

The third data packet may include third indication information indicating the second tactile sensing threshold, and the second signal and the third signal correspond to a same tactile flow, in other words, the second signal and the third signal are different signals in a same tactile flow. The third signal may be a next signal that is adjacent to the second signal and that is in the signals collected at the first contact, or may be a signal that is not adjacent to the second signal and that is in the signals collected at the first contact after the second signal. For detailed descriptions, refer to the corresponding descriptions in step 805.

The server may send the third data packet to the UPF network element through the N6 interface. Correspondingly, the UPF network element may receive the third data packet from the server through the N6 interface.

The UPF network element may determine a sixth data packet based on the third data packet, may determine a third QoS flow based on the second tactile sensing threshold, and then may send the sixth data packet to the access network device by using the third QoS flow. The sixth data packet may include sixth indication information indicating the second tactile sensing threshold. The third QoS flow may be a QoS flow corresponding to the second tactile sensing threshold. Optionally, the second tactile sensing threshold corresponds to a third PER, and the third PER corresponds to the third QoS flow. For detailed descriptions, refer to the corresponding descriptions in step 803.

The access network device may determine a ninth data packet based on the sixth data packet, may determine a third DRB based on the third QoS flow, and then may send the ninth data packet to the terminal device by using the third DRB. The third DRB is a DRB corresponding to the third QoS flow. For detailed descriptions, refer to the corresponding descriptions in step 804.

Optionally, the access network device may first determine a third resource, and then may send the ninth data packet to the terminal device by using the third resource. In a case, the access network device may determine the third resource based on the second tactile sensing threshold. In another case, the access network device may determine the third resource based on QoS corresponding to the second tactile sensing threshold. For detailed descriptions, refer to the corresponding descriptions in step 804.

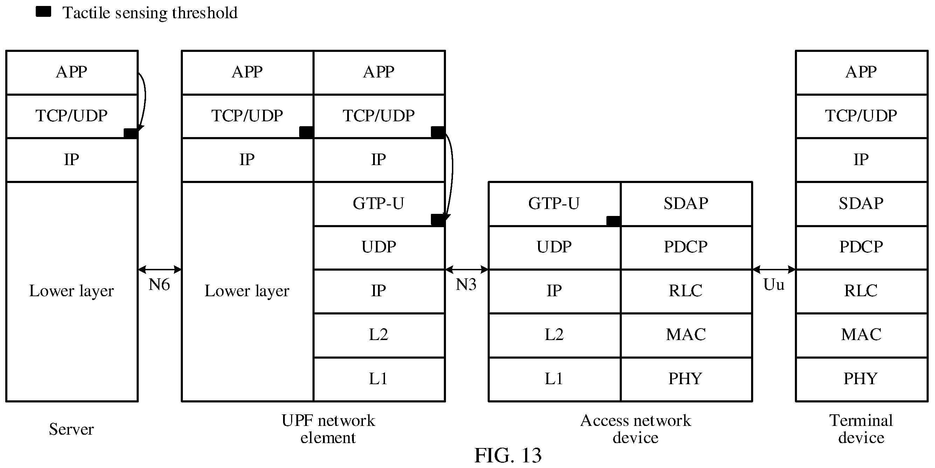

FIG. 13 is a diagram of a protocol stack according to an embodiment of this application. As shown in FIG. 13, a server may include an application (application, APP) layer, a TCP/UDP layer, an IP layer, and a lower layer (lower layer). A UPF network element may include an APP layer, a TCP/UDP layer, an IP layer, a lower layer, a GTP-U layer, a UDP layer, an L2 layer, and an L1 layer. An access network device may include a GTP-U layer, a UDP layer, an IP layer, an L2 layer, an L1 layer, a service data adaptation protocol (service data adaptation protocol, SDAP) layer, a packet data convergence protocol (packet data convergence protocol, PDCP) layer, a radio link control (radio link control, RLC) layer, a media access control (media access control, MAC) layer, and a physical (physical, PHY) layer. A terminal device may include an APP layer, a TCP/UDP layer, an IP layer, an SDAP layer, a PDCP layer, an RLC layer, a MAC layer, and a PHY layer. As shown in FIG. 13, a tactile sensing threshold may pass through the APP layer and the TCP/UDP layer of the server, the TCP/UDP layer and the GTP-U layer of the UPF network element, and the GTP-U layer of the access network device.

It should be understood that step 801 and step 808 are for downlink data. The server transfers a data packet including a tactile sensing threshold of a contact to the UPF network element. The UPF network element sends the data packet including the tactile sensing threshold to the access network device by using a QoS flow corresponding to the tactile sensing threshold. The access network device performs scheduling and configuration optimization on the data packet based on the tactile sensing threshold, so that transmission efficiency and user experience of a tactile service can be improved.

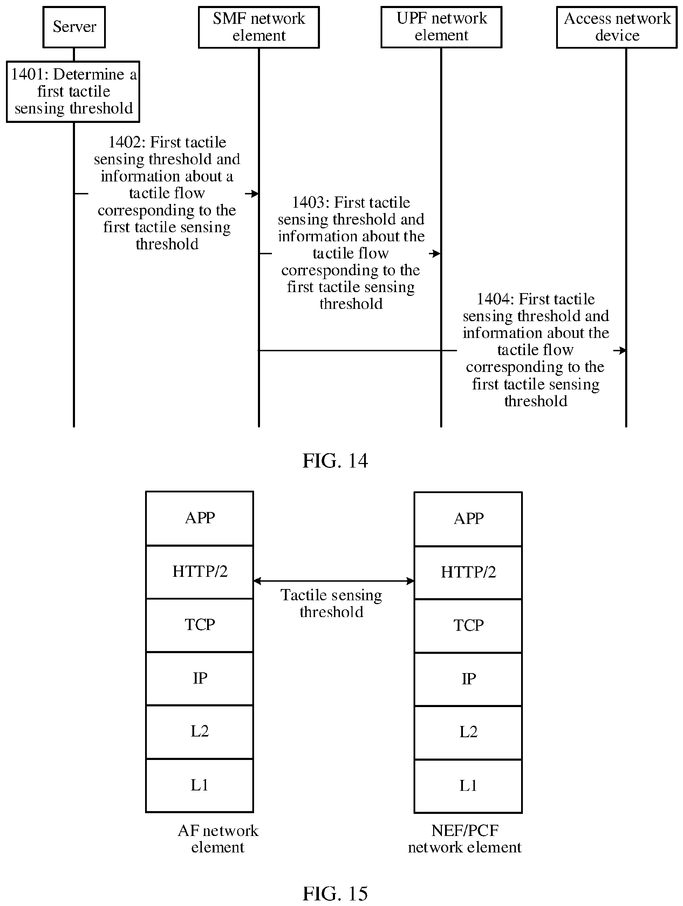

Based on the foregoing network architecture, FIG. 14 is a schematic flowchart of another communication method according to an embodiment of this application. In FIG. 14, an example in which a server, an SMF network element, a UPF network element, and an access network device are used as execution entities of the interaction illustration is used for illustrating the method. However, this application does not limit the execution entity of the interaction illustration. For example, the server in FIG. 14 may alternatively be a chip, a chip system, or a processor that supports the server in implementing the method, or may be a logical module or software that can implement all or some functions of the server. The SMF network element in FIG. 14 may alternatively be a chip, a chip system, or a processor that supports the UPF network element in implementing the method, or may be a logical module or software that can implement all or some functions of the UPF network element. The UPF network element in FIG. 14 may alternatively be a chip, a chip system, or a processor that supports the UPF network element in implementing the method, or may be a logical module or software that can implement all or some functions of the UPF network element. The access network device in FIG. 14 may alternatively be a chip, a chip system, or a processor that supports the access network device in implementing the method, or may be a logical module or software that can implement all or some functions of the access network device. As shown in FIG. 14, the communication method may include the following steps.

1401: The server determines a first tactile sensing threshold.

Before the server needs to send a signal to a terminal device, the server may first determine the first tactile sensing threshold. The first tactile sensing threshold may correspond to one tactile flow. Correspondingly, the first tactile sensing threshold may be a tactile sensing threshold corresponding to the tactile flow. The first tactile sensing threshold may alternatively correspond to a plurality of tactile flows, and the first tactile sensing threshold may be a tactile sensing threshold corresponding to the plurality of tactile flows. For detailed descriptions, refer to the related descriptions of the first tactile sensing threshold in step 801.

1402: The server sends, to the SMF network element, the first tactile sensing threshold and information about a tactile flow corresponding to the first tactile sensing threshold.

Correspondingly, the SMF network element receives, from the server, the first tactile sensing threshold and the information about the tactile flow corresponding to the first tactile sensing threshold.

The server may first send, to an AF network element, the first tactile sensing threshold and the information about the tactile flow corresponding to the first tactile sensing threshold. Correspondingly, the AF network element may receive, from the server, the first tactile sensing threshold and the information about the tactile flow corresponding to the first tactile sensing threshold. The information about the tactile flow may be a number of a contact corresponding to the tactile flow, or may be other information that can uniquely identify the tactile flow.

In a case, the AF network element may send, to a NEF network element through an N33 interface, the first tactile sensing threshold and the information about the tactile flow corresponding to the first tactile sensing threshold. Then, the NEF network element may send, to the SMF network element, the first tactile sensing threshold and the information about the tactile flow corresponding to the first tactile sensing threshold.

In another case, the AF network element may send, to a PCF network element through an N5 interface, the first tactile sensing threshold and the information about the tactile flow corresponding to the first tactile sensing threshold. Then, the PCF network element may send, to the SMF network element, the first tactile sensing threshold and the information about the tactile flow corresponding to the first tactile sensing threshold.

FIG. 15 is a diagram of protocol stacks of an N5 interface and an N33 interface according to an embodiment of this application. As shown in FIG. 15, an AF network element and a NEF/PCF network element may include an APP layer, a hypertext transfer protocol (hypertext transfer protocol, HTTP)/2 layer, a TCP layer, an IP layer, an L2 layer, and an L1 layer. Information between the N5 interface and the N33 interface may be transmitted through the HTTP/2 layer.

1403: The SMF network element sends, to the UPF network element, the first tactile sensing threshold and the information about the tactile flow corresponding to the first tactile sensing threshold.

Correspondingly, the UPF network element receives, from the SMF network element, the first tactile sensing threshold and the information about the tactile flow corresponding to the first tactile sensing threshold.

Optionally, when establishing a PDU session, the SMF network element may deliver, to the UPF network element as QoS features, the first tactile sensing threshold and the information about the tactile flow corresponding to the first tactile sensing threshold. In this case, the SMF network element may send a first PDR to the UPF network element through an N4 interface. The first PDR may include the first tactile sensing threshold and the information about the tactile flow corresponding to the first tactile sensing threshold. In other words, the first tactile sensing threshold and the information about the tactile flow corresponding to the first tactile sensing threshold are added to the first PDR.

1404: The SMF network element sends, to the access network device, the first tactile sensing threshold and the information about the tactile flow corresponding to the first tactile sensing threshold.

Correspondingly, the access network device receives, from the SMF network element, the first tactile sensing threshold and the information about the tactile flow corresponding to the first tactile sensing threshold.

Optionally, when establishing the PDU session, the SMF network element may deliver, to the access network device as the QoS features, the first tactile sensing threshold and the information about the tactile flow corresponding to the first tactile sensing threshold. In this case, the SMF network element may send a first QoS profile to the access network device through an N2 interface via an AMF network element. The first QoS profile may include the first tactile sensing threshold and the information about the tactile flow corresponding to the first tactile sensing threshold. In other words, the first tactile sensing threshold and the information about the tactile flow corresponding to the first tactile sensing threshold are added to the first QoS profile.

It should be understood that a transmission manner of the first tactile sensing threshold is not limited, and may be explicit transmission, or may be implicit transmission. For example, transmission may be performed in a transmission manner of the first tactile sensing threshold in the method corresponding to FIG. 8.

Similarly, a transmission manner of the tactile flow corresponding to the first tactile sensing threshold is not limited, and may be explicit transmission, or may be implicit transmission.

After sending, to the SMF network element, the first tactile sensing threshold and the information about the tactile flow corresponding to the first tactile sensing threshold, the server needs to send, to a terminal device, a signal collected at a first contact. When a first tactile flow corresponding to the first contact belongs to the tactile flow corresponding to the first tactile sensing threshold, the server may encode a first signal to obtain a first data packet, and then may send the first data packet to the UPF network element. The first data packet may include information about the first tactile flow.

The UPF network element may determine a fourth data packet based on the first data packet, and may determine the first tactile sensing threshold corresponding to the information about the first tactile flow, to further determine a first QoS flow corresponding to the first tactile sensing threshold. Then, the UPF network element may send the fourth data packet to the access network device by using the first QoS flow, and the fourth data packet may include the information about the first tactile flow. The fourth data packet may be a GTP-U data packet, and a packet header of the GTP-U data packet may include the information about the first tactile flow.

The access network device may determine a seventh data packet based on the fourth data packet, and may send the seventh data packet to the terminal device by using a first DRB. The first QoS flow corresponds to the first DRB. Optionally, the access network device may first determine a first resource based on the first tactile sensing threshold, or first determine a first resource based on QoS corresponding to the first tactile sensing threshold, and then may send the seventh data packet to the terminal device by using the first resource.

After the first data packet is sent, if the first signal, a second signal, and the first tactile sensing threshold meet a first condition, the server may encode the second signal to obtain a second data packet, and then may send the second data packet to the UPF network element. The second data packet may include the information about the first tactile flow, and the first signal and the second signal correspond to a same tactile flow.

The first condition may include at least one of the following: A ratio of an absolute value of a difference between the second signal and the first signal to the first signal is greater than or equal to the first tactile sensing threshold; the absolute value of the difference between the second signal and the first signal is greater than or equal to the first tactile sensing threshold; a ratio of the second signal to the first signal is greater than or equal to the first tactile sensing threshold; a ratio of the first signal to the second signal is greater than or equal to the first tactile sensing threshold; the ratio of the second signal to the first signal is less than or equal to the first tactile sensing threshold; and the ratio of the first signal to the second signal is less than or equal to the first tactile sensing threshold.

The UPF network element may determine a fifth data packet based on the second data packet, and may determine the first tactile sensing threshold corresponding to the information about the first tactile flow, to further determine a second QoS flow corresponding to the first tactile sensing threshold. Then, the UPF network element may send the fifth data packet to the access network device by using the second QoS flow, and the fifth data packet may include the information about the first tactile flow. The fifth data packet may be a GTP-U data packet, and a packet header of the GTP-U data packet may include the information about the first tactile flow.

The access network device may determine an eighth data packet based on the fifth data packet, and may send the eighth data packet to the terminal device by using a second DRB. The second QoS flow corresponds to the second DRB. Optionally, the access network device may first determine a second resource based on the first tactile sensing threshold, or first determine a second resource based on the QoS corresponding to the first tactile sensing threshold, and then may send the eighth data packet to the terminal device by using the second resource.

Optionally, the SMF network element may first determine a first PER based on the first tactile sensing threshold, then may send, to the UPF network element, information about the first PER and information about a tactile flow corresponding to the first PER, and may send, to the access network device, the information about the first PER and the information about the tactile flow corresponding to the first PER.

The UPF network element may determine the first PER corresponding to the information about the first tactile flow, may further determine the first QoS flow corresponding to the first PER, and then may send the fourth data packet to the access network device by using the first QoS flow. The access network device may determine the first resource based on the first PER, or determine the first resource based on QoS corresponding to the first PER.

The UPF network element may determine the first PER corresponding to the information about the first tactile flow, may further determine the second QoS flow corresponding to the first PER, and then may send the fifth data packet to the access network device by using the second QoS flow. The access network device may determine the second resource based on the first PER, or determine the second resource based on QoS corresponding to the second PER.

After the second data packet is sent, when a tactile sensing threshold corresponding to the tactile flow corresponding to the first tactile sensing threshold changes, the server may determine a second tactile sensing threshold, and may send, to the SMF network element, the second tactile sensing threshold and information about a tactile flow corresponding to the second tactile sensing threshold. Correspondingly, the SMF network element receives, from the server, the second tactile sensing threshold and the information about the tactile flow corresponding to the second tactile sensing threshold. The first tactile sensing threshold and the second tactile sensing threshold correspond to a same tactile flow. For detailed descriptions, refer to the corresponding descriptions in step 1401 to step 1402.

The SMF network element may send, to the UPF network element, the second tactile sensing threshold and the information about the tactile flow corresponding to the second tactile sensing threshold. Optionally, the SMF network element may send a second PDR to the UPF network element. The second PDR may include the second tactile sensing threshold and the information about the tactile flow corresponding to the second tactile sensing threshold. For detailed descriptions, refer to the corresponding descriptions in step 1403.

The SMF network element may send, to the access network device, the second tactile sensing threshold and the information about the tactile flow corresponding to the second tactile sensing threshold. Optionally, the SMF may send a second QoS profile to the access network device. The second QoS profile may include the second tactile sensing threshold and the information about the tactile flow corresponding to the second tactile sensing threshold. For detailed descriptions, refer to the corresponding descriptions in step 1404.

When the second signal, a third signal, and the second tactile sensing threshold meet a second condition, the server may encode the third signal to obtain a third data packet, and then may send the third data packet to the UPF network element. The third data packet may include the information about the first tactile flow, and the second signal and the third signal correspond to a same tactile flow.

The second condition may include at least one of the following: A ratio of an absolute value of a difference between the third signal and the second signal to the second signal is greater than or equal to the second tactile sensing threshold; the absolute value of the difference between the third signal and the second signal is greater than or equal to the second tactile sensing threshold; a ratio of the third signal to the second signal is greater than or equal to the second tactile sensing threshold; a ratio of the second signal to the third signal is greater than or equal to the second tactile sensing threshold; the ratio of the third signal to the second signal is less than or equal to the second tactile sensing threshold; and the ratio of the second signal to the third signal is less than or equal to the second tactile sensing threshold.

The UPF network element may determine a sixth data packet based on the third data packet, may determine the second tactile sensing threshold corresponding to the information about the first tactile flow, to further determine a third QoS flow corresponding to the second tactile sensing threshold. Then, the UPF network element may send the sixth data packet to the access network device by using the third QoS flow, and the sixth data packet may include the information about the first tactile flow. The sixth data packet may be a GTP-U data packet, and a packet header of the GTP-U data packet may include the information about the first tactile flow.

The access network device may determine a ninth data packet based on the sixth data packet, and may send the eighth data packet to the terminal device by using a third DRB. The third QoS flow corresponds to the third DRB. Optionally, the access network device may first determine a third resource based on the second tactile sensing threshold, or first determine a third resource based on QoS corresponding to the second tactile sensing threshold, and then may send the ninth data packet to the terminal device by using the third resource.

Optionally, the SMF network element may first determine the second PER based on the second tactile sensing threshold, then may send, to the UPF network element, information about the second PER and information about a tactile flow corresponding to the second PER, and may send, to the access network device, the information about the second PER and the information about the tactile flow corresponding to the second PER.

The UPF network element may determine the second PER corresponding to the information about the first tactile flow, may further determine the third QoS flow corresponding to the second PER, and then may send the sixth data packet to the access network device by using the third QoS flow. The access network device may determine the third resource based on the second PER, or determine the third resource based on QoS corresponding to the second PER.

It should be understood that a difference between the communication method corresponding to FIG. 14 and the communication method corresponding to FIG. 8 lies in: In the communication method corresponding to FIG. 8, a tactile sensing threshold is delivered to the UPF network element and the access network device through a user plane, in other words, a data packet includes indication information indicating the tactile sensing threshold. However, in the communication method corresponding to FIG. 14, the tactile sensing threshold and the tactile sensing threshold are delivered to the UPF network element and the access network device through a control plane, and the data packet does not include information about the tactile sensing threshold, but includes information about a corresponding tactile flow.

For related or corresponding content in the communication method corresponding to FIG. 14 and the communication method corresponding to FIG. 8, refer to FIG. 8. In the communication method corresponding to FIG. 14, mutual reference may be made to related or corresponding content at different positions.

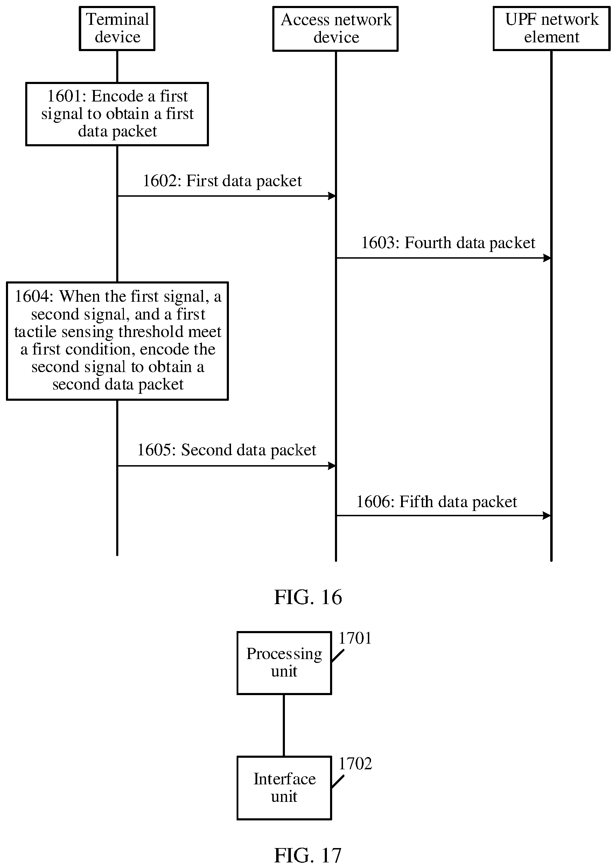

Based on the foregoing network architecture, FIG. 16 is a schematic flowchart of still another communication method according to an embodiment of this application. In FIG. 16, an example in which a terminal device, an access network device, and a UPF network element are used as execution entities of the interaction illustration is used for illustrating the method. However, this application does not limit the execution entity of the interaction illustration. For example, the terminal device in FIG. 16 may alternatively be a chip, a chip system, or a processor that supports the terminal device in implementing the method, or may be a logical module or software that can implement all or some functions of the terminal device. The access network device in FIG. 16 may alternatively be a chip, a chip system, or a processor that supports the access network device in implementing the method, or may be a logical module or software that can implement all or some functions of the access network device. The UPF network element in FIG. 16 may alternatively be a chip, a chip system, or a processor that supports the UPF network element in implementing the method, or may be a logical module or software that can implement all or some functions of the UPF network element. As shown in FIG. 16, the communication method may include the following steps.

1601: The terminal device encodes a first signal to obtain a first data packet.

The terminal device may encode the first signal to obtain the first data packet. The first data packet may include first indication information indicating a first tactile sensing threshold, or may not include first indication information indicating a first tactile sensing threshold.

For detailed descriptions of step 1601, refer to the corresponding descriptions in step 801. Details are not described herein again.

1602: The terminal device sends the first data packet to the access network device.

Correspondingly, the access network device receives the first data packet from the terminal device.

The terminal device may send the first data packet to the access network device by using a first QoS flow, and the first QoS flow is a QoS flow corresponding to the first tactile sensing threshold. Optionally, the first tactile sensing threshold may correspond to a first PER, and the first PER may correspond to the first QoS flow. For detailed descriptions, refer to the corresponding descriptions in step 803.

The first data packet may be carried on a first DRB, and the first QoS flow corresponds to the first DRB. For detailed descriptions, refer to the related descriptions in step 804.

The terminal device may send the first data packet to the access network device through a Uu interface.

After encoding the first signal to obtain the first data packet, the terminal device may first store the first data packet in an RLC buffer (buffer), and may first send information about the first data packet to the access network device. The information about the first data packet may include information about the first tactile sensing threshold. After receiving the information about the first data packet from the terminal device, the access network device may determine a first resource based on the first tactile sensing threshold, or may determine a first resource based on QoS corresponding to the first tactile sensing threshold, and then may send information about the first resource to the terminal device. For detailed descriptions, refer to the related descriptions of determining the first resource in step 804. The information about the first data packet may be carried in signaling such as a buffer status report (buffer status report, BSR) or RRC.

Optionally, after receiving the information about the first data packet from the terminal device, the access network device may first determine, based on the first tactile sensing threshold, whether to allow transmission of the first data packet. When the transmission of the first data packet is not allowed, the access network device does not need to schedule a transmission resource for the first data packet, and may send, to the terminal device, information indicating that the transmission of the first data packet is not allowed, so that the terminal device can perform packet discarding processing on the first data packet based on the information. When the transmission of the first data packet is allowed, the access network device may determine the first resource for the first data packet.

After receiving the information about the first resource from the access network device, the terminal device may send the buffered first data packet to the access network device by using the first resource, in other words, send the first data packet to the access network device on the first resource. Correspondingly, the access network device may receive the first data packet from the terminal device by using the first resource, in other words, receive the first data packet from the terminal device on the first resource.

1603: The access network device sends a fourth data packet to the UPF network element.

Correspondingly, the UPF network element receives the fourth data packet from the access network device.

After receiving the first data packet from the terminal device, the access network device may determine the fourth data packet based on the first data packet, and then may send the fourth data packet to the UPF network element. After receiving the fourth data packet, the UPF network element may send, to a server, a seventh data packet corresponding to the fourth data packet.

1604: When the first signal, a second signal, and the first tactile sensing threshold meet a first condition, the terminal device encodes the second signal to obtain a second data packet.

After the first data packet is sent, if the first signal, the second signal, and the first tactile sensing threshold meet the first condition, the terminal device may encode the second signal to obtain the second data packet, and then may send the second data packet to the access network device. The first signal and the second signal correspond to a same tactile flow. The second data packet may include or may not include second indication information indicating the first tactile sensing threshold. For detailed descriptions of the second signal and the first condition, refer to the corresponding descriptions in step 805.

1605: The terminal device sends the second data packet to the access network device.

Correspondingly, the access network device receives the second data packet from the terminal device.

The terminal device may send the second data packet to the access network device by using a second QoS flow, and the second QoS flow is a QoS flow corresponding to the first tactile sensing threshold. Optionally, the first tactile sensing threshold corresponds to a second PER, and the second PER corresponds to the second QoS flow. The first QoS flow and the second QoS flow may be the same or may be different. The second data packet may be carried on a second DRB, and the second QoS flow corresponds to the second DRB. The first DRB and the second DRB may be the same or may be different. The first PER and the second PER may be the same or may be different. The terminal device may send the second data packet to the access network device through the Uu interface.

Optionally, the terminal device may first send information about the second data packet to the access network device, and the information about the second data packet may include the information about the first tactile sensing threshold. The access network device may determine a second resource based on the first tactile sensing threshold, or may determine a second resource based on the QoS corresponding to the first tactile sensing threshold, and then may send the information about the second resource to the terminal device. The terminal device may send the second data packet to the access network device by using the second resource. Correspondingly, the access network device may receive the second data packet from the terminal device by using the second resource.

For the foregoing detailed description, refer to the corresponding descriptions in step 1602.

1606: The access network device sends a fifth data packet to the UPF network element.

Correspondingly, the UPF network element receives the fifth data packet from the access network device.

After receiving the second data packet from the terminal device, the access network device may determine the fifth data packet based on the second data packet, and then may send the fifth data packet to the UPF network element. After receiving the fifth data packet, the UPF network element may send, to the server, an eighth data packet corresponding to the fifth data packet.

After receiving the data packet from the access network device, the UPF network element may send the data packet to the server.

When a tactile sensing threshold of a contact changes, the terminal device may determine a tactile sensing threshold of a first contact periodically or in real time. When the tactile sensing threshold that is of the first contact and that is determined by the terminal device is a second tactile sensing threshold, the terminal device may determine, based on the second signal and the second tactile sensing threshold, a next signal that needs to be sent and that is in signals collected at the first contact. When the second signal, a third signal, and the second tactile sensing threshold meet a second condition, the terminal device may encode the third signal to obtain a third data packet. The third data packet may include or may not include third indication information indicating the second tactile sensing threshold. The second signal and the third signal correspond to a same tactile flow. For detailed descriptions, refer to the corresponding descriptions in step 806.

The terminal device may send the third data packet to the access network device. Correspondingly, the access network device receives the third data packet from the terminal device. The terminal device may send the third data packet to the access network device by using a third QoS flow, and the third QoS flow is a QoS flow corresponding to the second tactile sensing threshold. Optionally, the second tactile sensing threshold corresponds to a third PER, and the third PER corresponds to the third QoS flow. The second data packet may be carried on a third DRB, and the third QoS flow corresponds to the third DRB. The terminal device may send the third data packet to the access network device through the Uu interface. After receiving the third data packet from the terminal device, the access network device may determine a sixth data packet based on the third data packet, and then may send the sixth data packet to the UPF network element. After receiving the sixth data packet, the UPF network element may send, to the server, a ninth data packet corresponding to the sixth data packet.

Optionally, the terminal device may first send information about the third data packet to the access network device, and the information about the third data packet may include information about the second tactile sensing threshold. The access network device may determine a third resource based on the second tactile sensing threshold, or may determine a third resource based on QoS corresponding to the second tactile sensing threshold, and then may send information about the third resource to the terminal device. The terminal device may send the third data packet to the access network device by using the third resource. Correspondingly, the access network device may receive the third data packet from the terminal device by using the third resource. For detailed descriptions, refer to the corresponding descriptions in step 1402.

It should be understood that step 1601 and step 1606 are for uplink data transmission. The terminal device sends a data packet to the access network device by using a QoS flow corresponding to a tactile sensing threshold, the access network device sends the data packet to the UPF network element, and the UPF network element sends the data packet to the server, so that transmission efficiency and user experience of a tactile service can be improved.

In an embodiment, there may be both uplink data transmission and downlink data transmission. For example, one communication method may include both the communication method corresponding to FIG. 8 or FIG. 14 and the communication method corresponding to FIG. 16.

It should be understood that, for related descriptions of same information or corresponding information in the foregoing different communication methods or different steps, different positions, or different embodiments in a same communication method, reference may be made to each other.

FIG. 17 is a diagram of a structure of a communication apparatus according to an embodiment of this application. As shown in FIG. 17, the communication apparatus may include a processing unit 1701 and an interface unit 1702.

The communication apparatus may be configured to implement a function of the server in the method embodiment shown in FIG. 8. For detailed descriptions, refer to the content in the tenth aspect of the summary and the related descriptions of the server in FIG. 8. Details are not described herein again.

The communication apparatus may be configured to implement a function of the access network device in the method embodiment shown in FIG. 8. For detailed descriptions, refer to the content in the twelfth aspect of the summary and the related descriptions of the access network device in FIG. 8. Details are not described herein again.

The communication apparatus may be configured to implement a function of the server in the method embodiment shown in FIG. 14. For detailed descriptions, refer to the content in the thirteenth aspect of the summary and the related descriptions of the server in FIG. 14. Details are not described herein again.

The communication apparatus may be configured to implement a function of the SMF network element in the method embodiment shown in FIG. 14. For detailed descriptions, refer to the content in the fourteenth aspect of the summary and the related descriptions of the SMF network element in FIG. 14. Details are not described herein again.

The communication apparatus may be configured to implement a function of the access network device in the method embodiment shown in FIG. 14. For detailed descriptions, refer to the content in the sixteenth aspect of the summary and the related descriptions of the access network device in FIG. 14. Details are not described herein again.

The communication apparatus may be configured to implement a function of the terminal device in the method embodiment shown in FIG. 16. For detailed descriptions, refer to the content in the seventeenth aspect of the summary and the related descriptions of the terminal device in FIG. 16. Details are not described herein again.

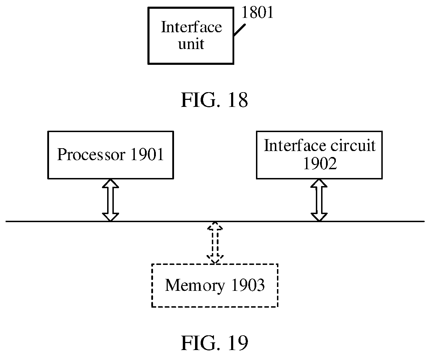

FIG. 18 is a diagram of a structure of another communication apparatus according to an embodiment of this application. As shown in FIG. 18, the communication apparatus may include an interface unit 1801.

The communication apparatus may be configured to implement a function of the UPF network element in the method embodiment shown in FIG. 8. For detailed descriptions, refer to the content in the eleventh aspect of the summary and the related descriptions of the UPF network element in FIG. 8. Details are not described herein again.

The communication apparatus may be configured to implement a function of the UPF network element in the method embodiment shown in FIG. 14. For detailed descriptions, refer to the content in the fifteenth aspect of the summary and the related descriptions of the UPF network element in FIG. 14. Details are not described herein again.

The communication apparatus may be configured to implement a function of the access network device in the method embodiment shown in FIG. 16. For detailed descriptions, refer to the content in the eighteenth aspect of the summary and the related descriptions of the access network device in FIG. 16. Details are not described herein again.

FIG. 19 is a diagram of a structure of another communication apparatus according to an embodiment of this application. As shown in FIG. 19, the communication apparatus may include a processor 1901 and an interface circuit 1902. The processor 1901 and the interface circuit 1902 are coupled to each other. It may be understood that the interface circuit 1902 may be a transceiver or an input/output interface. Optionally, the communication apparatus may further include a memory 1903, configured to: store instructions to be executed by the processor 1901, store input data needed by the processor 1901 to run instructions, or store data generated after the processor 1901 runs instructions.

When the communication apparatus is configured to implement the method in the foregoing method embodiment, the processor 1901 is configured to: perform a function of the foregoing processing unit 1701, and control the interface unit 1702 (or 1801) to perform the foregoing function. The interface circuit 1902 is configured to perform a function of the foregoing interface unit 1702 (or 1801).

When the foregoing communication apparatus is a chip used in a terminal device, the chip in the terminal device implements a function of the terminal device in the foregoing method embodiments. The chip in the terminal device receives information from another module (for example, a radio frequency module or an antenna) in the terminal device, where the information is sent by an access network device to the terminal device. Alternatively, the chip in the terminal device sends information to another module (for example, a radio frequency module or an antenna) in the terminal device, where the information is sent by the terminal device to an access network device.

When the foregoing communication apparatus is a chip used in the access network device, the chip in the access network device implements a function of the access network device in the foregoing method embodiments. The chip in the access network device receives information from another module (for example, a radio frequency module or an antenna) in the access network device, where the information is sent by the terminal device to the access network device. Alternatively, the chip in the access network device sends information to another module (for example, a radio frequency module or an antenna) in the access network device, where the information is sent by the access network device to the terminal device.

When the foregoing communication apparatus is a chip used in a UPF network element, the chip in the UPF network element implements a function of the UPF network element in the method embodiments. The chip in the UPF network element receives information from another module (for example, a radio frequency module or an antenna) in the UPF network element, where the information is sent by the access network device, an SMF network element, or a server to the UPF network element. Alternatively, the chip in the UPF network element sends information to another module (for example, a radio frequency module or an antenna) in the UPF network element, where the information is sent by the UPF network element to the access network device or a server.

When the foregoing communication apparatus is a chip used in the SMF network element, the chip in the SMF network element implements a function of the SMF network element in the method embodiments. The chip in the SMF network element receives information from another module (for example, a radio frequency module or an antenna) in the SMF network element, where the information is sent by the server to the SMF network element. Alternatively, the chip in the SMF network element sends information to another module (for example, a radio frequency module or an antenna) in the SMF network element, where the information is sent by the SMF network element to the access network device or the UPF network element.

When the foregoing communication apparatus is a chip used in the server, the chip in the server implements a function of the server in the method embodiments. The chip in the server receives information from another module (for example, a radio frequency module or an antenna) in the server, where the information is sent by the UPF network element to the SMF network element. Alternatively, the chip in the SMF network element sends information to another module (for example, a radio frequency module or an antenna) in the SMF network element, where the information is sent by the SMF network element to the SMF network element or the UPF network element.

It may be understood that the processor in embodiments of this application may be a central processing unit (central processing unit, CPU), may be another general purpose processor, a digital signal processor (digital signal processor, DSP), an application-specific integrated circuit (application-specific integrated circuit, ASIC), or the like.

An embodiment of this application further discloses a computer-readable storage medium. The computer-readable storage medium stores a computer program or computer instructions. When the computer program or the computer instructions is/are run on a computer, the method in the foregoing method embodiments is performed.

An embodiment of this application further discloses a computer program product including a computer program or computer instructions. When the computer program or the computer instructions is/are run on a computer, the method in the foregoing method embodiments is performed.

It is clear that the described embodiments are merely some but not all of embodiments of this application. "Embodiment" mentioned in the specification means that a particular feature, structure, or characteristic described with reference to embodiments may be included in at least one of embodiments of this application. The phrase shown in various positions in the specification may not necessarily refer to a same embodiment, and is not an independent or optional embodiment exclusive from another embodiment. It may be understood explicitly and implicitly by a person skilled in the art that the embodiments described in the specification may be combined with other embodiments. Solely the appended claims are limiting the scope of the present invention.

In the specification, claims, and accompanying drawings of this application, the terms "first", "second", "third", and the like are used to distinguish between different objects but do not indicate a particular order. In addition, terms such as "include" and "have" and any other variants thereof are intended to cover a non-exclusive inclusion. For example, a series of steps or units are included; optionally, a step or unit that is not listed is further included; or optionally, another inherent step or unit of the process, the method, the product, or the device is further included.

The accompanying drawings show only a part rather than all content related to this application. Before example embodiments are discussed in more detail, it should be mentioned that some example embodiments are described as processing or methods depicted as flowcharts. Although the flowchart describes operations (or steps) as sequential processing, many of the operations can be implemented in parallel, concurrently, or simultaneously. In addition, the sequence of the operations may be rearranged. The processing may be terminated upon completion of its operation, but may further have additional steps not included in the accompanying drawings.

Terms such as "unit" used in this specification indicate computer-related entities, hardware, firmware, combinations of hardware and software, software, or software being executed. For example, a unit may be, but is not limited to, a process running on a processor, a processor, an object, an executable file, an execution thread, or a program, and/or may be distributed between two or more computers. In addition, these units may be executed from various computer-readable media storing various data structures. For example, the units may communicate with each other by using a local and/or remote process based on a signal having one or more data packets (for example, data from a second unit interacting with another unit in a local system, in a distributed system, and/or across a network, such as the internet interacting with another system by using a signal).

In addition, in embodiments of this application, unless otherwise specified, a quantity of nouns indicates "a singular noun or a plural noun", that is, "one or more". "At least one" means one or more, "a plurality of" means two or more, and "a plurality of" in "one or more" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof refers to any combination of these items, including any combination of singular items (pieces) or plural items (pieces). For example, at least one item (piece) of a, b, or c may represent: a, b, c, a and b, a and c, b and c, or a, b, and c. Herein, a, b, and c may be singular or plural.

**Claims**

1.  A communication method, comprising:

    encoding (801) a first signal to obtain a first data packet, wherein the first data packet comprises first indication information indicating a first tactile sensing threshold;
    sending (802) the first data packet to a user plane function, UPF, network element;
    when the first signal, a second signal, and the first tactile sensing threshold meet a first condition, wherein the first condition is that a change of the second signal with regard to the first signal is equal to or greater than the first tactile sensing threshold, encoding (805) the second signal to obtain a second data packet, wherein the second data packet comprises second indication information indicating the first tactile sensing threshold, and the first signal and the second signal correspond to a same tactile flow, wherein the first tactile sensing threshold is associated with a specific quality of service (QoS) flow and the same tactile flow is identified by a unique flow identifier or QoS flow correspondence; and
    sending (806) the second data packet to the UPF network element; and wherein the method further comprises:

    when the second signal, a third signal, and a second tactile sensing threshold meet a second condition, encoding the third signal to obtain a third data packet, wherein the third data packet comprises third indication information indicating the second tactile sensing threshold, and the second signal and the third signal correspond to a same tactile flow; and
    sending the third data packet to the UPF network element.

2.  A communication method, comprising:

    receiving (802) a first data packet from a server, wherein the first data packet comprises first indication information indicating a first tactile sensing threshold; and
    sending (803) a fourth data packet to an access network device (102) by using a first quality of service, QoS, flow, wherein the fourth data packet comprises fourth indication information indicating the first tactile sensing threshold, and the first QoS flow is a QoS flow corresponding to the first tactile sensing threshold; and
    wherein the method further comprises:

    receiving (806) a second data packet from the server, wherein the second data packet comprises second indication information indicating the first tactile sensing threshold, the first data packet corresponds to a first signal, the second data packet corresponds to a second signal, the first signal, the second signal, and the first tactile sensing threshold meet a first condition, and the first signal and the second signal correspond to a same tactile flow; and
    sending (807) a fifth data packet to the access network device (102) by using a second QoS flow, wherein the fifth data packet comprises fifth indication information indicating the first tactile sensing threshold, and the second QoS flow is a QoS flow corresponding to the first tactile sensing threshold.

3.  The method according to claim 2, wherein the method further comprises:

    receiving a third data packet from the server, wherein the third data packet comprises third indication information indicating a second tactile sensing threshold, the third data packet corresponds to a third signal, the second signal, the third signal, and the second tactile sensing threshold meet a second condition, and the second signal and the third signal correspond to a same tactile flow; and
    sending a sixth data packet to the access network device (102) by using a third QoS flow, wherein the sixth data packet comprises sixth indication information indicating the second tactile sensing threshold, and the third QoS flow is a QoS flow corresponding to the second tactile sensing threshold.

4. The method according to any one of claims 2 to 3, wherein the first tactile sensing threshold corresponds to a first packet error rate, PER, and the first PER corresponds to the first QoS flow.

5. A communication apparatus, comprising a processor (1901), wherein the processor (1901) is coupled to a memory (1903), the memory (1903) is configured to store a program or instructions, and when the program or the instructions are executed by the processor (1901), the apparatus is enabled to perform the method according to any one of claims 1 to 4.

6. A computer-readable storage medium, wherein the computer-readable storage medium stores a computer program or computer instructions, and when the computer program or the computer instructions are run, the method according to any one of claims 1 to 4 is implemented.


**Patentansprüche**

1. Kommunikationsverfahren, Folgendes umfassend:

Codieren (801) eines ersten Signals, um ein erstes Datenpaket zu erlangen, wobei das erste Datenpaket erste Angabeinformationen umfasst, die einen ersten taktilen Messschwellenwert angeben;
Senden (802) des ersten Datenpakets an ein Netzwerkelement der Benutzerebenenfunktion, UPF-Netzwerkelement;
wenn das erste Signal, ein zweites Signal und der erste taktile Messschwellenwert eine erste Bedingung erfüllen, wobei die erste Bedingung ist, dass eine Änderung des zweiten Signals hinsichtlich des ersten Signals gleich oder größer ist als der erste taktile Messschwellenwert, Codieren (805) des zweiten Signals, um ein zweites Datenpaket zu erlangen, wobei das zweite Datenpaket zweite Angabeinformationen umfasst, die den ersten taktilen Messschwellenwert angeben, und das erste Signal und das zweite Signal einem gleichen taktilen Fluss entsprechen, wobei der erste taktile Messschwellenwert einem bestimmten Dienstgütefluss (QoS-Fluss) zugeordnet ist und der gleiche taktile Fluss durch eine eindeutige Flusskennung oder QoS-Flussentsprechung identifiziert wird; und
Senden (806) des zweiten Datenpakets an das UPF-Netzwerkelement; und wobei das Verfahren weiterhin Folgendes umfasst:

wenn das zweite Signal, ein drittes Signal und ein zweiter taktiler Messschwellenwert eine zweite Bedingung erfüllen, Codieren des dritten Signals, um ein drittes Datenpaket zu erlangen, wobei das dritte Datenpaket dritte Angabeinformationen umfasst, die den zweiten taktilen Messschwellenwert angeben, und das zweite Signal und das dritte Signal einem gleichen taktilen Fluss entsprechen; und
Senden des dritten Datenpakets an das UPF-Netzwerkelement.

2. Kommunikationsverfahren, Folgendes umfassend:

Empfangen (802) eines ersten Datenpakets von einem Server, wobei das erste Datenpaket erste Angabeinformationen umfasst, die einen ersten taktilen Messschwellenwert angeben; und
Senden (803) eines vierten Datenpakets an eine Zugangsnetzvorrichtung (102) unter Verwendung eines ersten Dienstgüteflusses, QoS-Flusses, wobei das vierte Datenpaket vierte Angabeinformationen umfasst, die den ersten taktilen Messschwellenwert angeben, und der erste QoS-Fluss ein QoS-Fluss ist, der dem ersten taktilen Messschwellenwert entspricht; und
wobei das Verfahren weiterhin Folgendes umfasst:

Empfangen (806) eines zweiten Datenpakets von dem Server, wobei das zweite Datenpaket zweite Angabeinformationen umfasst, die den ersten taktilen Messschwellenwert angeben, das erste Datenpaket einem ersten Signal entspricht, das zweite Datenpaket einem zweiten Signal entspricht, das erste Signal, das zweite Signal und der erste taktile Messschwellenwert eine erste Bedingung erfüllen und das erste Signal und das zweite Signal einem gleichen taktilen Fluss entsprechen; und
Senden (807) eines fünften Datenpakets an die Zugangsnetzvorrichtung (102) unter Verwendung eines zweiten QoS-Flusses, wobei das fünfte Datenpaket fünfte Angabeinformationen umfasst, die den ersten taktilen Messschwellenwert angeben, und der zweite QoS-Fluss ein QoS-Fluss ist, der dem ersten taktilen Messschwellenwert entspricht.

3. Verfahren nach Anspruch 2, wobei das Verfahren weiterhin Folgendes umfasst:

Empfangen eines dritten Datenpakets von dem Server, wobei das dritte Datenpaket dritte Angabeinformationen umfasst, die einen zweiten taktilen Messschwellenwert angeben, das dritte Datenpaket einem dritten Signal entspricht, das zweite Signal, das dritte Signal und der zweite taktile Messschwellenwert eine zweite Bedingung erfüllen und das zweite Signal und das dritte Signal einem gleichen taktilen Fluss entsprechen; und
Senden eines sechsten Datenpakets an die Zugangsnetzvorrichtung (102) unter Verwendung eines dritten QoS-Flusses, wobei das sechste Datenpaket sechste Angabeinformationen umfasst, die den zweiten taktilen Messschwellenwert angeben, und der dritte QoS-Fluss ein QoS-Fluss ist, der dem zweiten taktilen Messschwellenwert entspricht.

4. Verfahren nach einem der Ansprüche 2 bis 3, wobei der erste taktile Messschwellenwert einer ersten Paketfehlerrate, PER, entspricht und die erste PER dem ersten QoS-Fluss entspricht.

5. Kommunikationsvorrichtung, einen Prozessor (1901) umfassend, wobei der Prozessor (1901) an einen Speicher (1903) angeschlossen ist, der Speicher (1903) eingerichtet ist, um ein Programm oder Befehle zu speichern, und, wenn das Programm oder die Befehle durch den Prozessor (1901) ausgeführt werden, der Vorrichtung ermöglicht wird, das Verfahren nach einem der Ansprüche 1 bis 4 durchzuführen.

6. Computerlesbares Speichermedium, wobei das computerlesbare Speichermedium ein Computerprogramm oder Computerbefehle speichert, und wenn das Computerprogramm oder die Computerbefehle ausgeführt werden, das Verfahren nach einem der Ansprüche 1 bis 4 implementiert wird.

**Revendications**

1. Procédé de communication, comprenant :

le codage (801) d'un premier signal pour obtenir un premier paquet de données, le premier paquet de données comprenant des premières informations d'indication indiquant un premier seuil de détection tactile ;
l'envoi (802) du premier paquet de données à un élément de réseau d'une fonction de plan d'utilisateur, UPF ;
lorsque le premier signal, un deuxième signal et le premier seuil de détection tactile satisfont une première condition, la première condition étant qu'un changement du deuxième signal par rapport au premier signal soit égal ou supérieur au premier seuil de détection tactile, le codage (805) du deuxième signal pour obtenir un deuxième paquet de données, le deuxième paquet de données comprenant des deuxièmes informations d'indication indiquant le premier seuil de détection tactile, et le premier signal et le deuxième signal correspondant à un même flux tactile, le premier seuil de détection tactile étant associé à un flux de qualité de service (QoS) spécifique et le même flux tactile étant identifié par un identifiant de flux unique ou une correspondance de flux de QoS ; et
l'envoi (806) du deuxième paquet de données à l'élément de réseau UPF ; et le procédé comprenant en outre :

lorsque le deuxième signal, un troisième signal et un second seuil de détection tactile satisfont une seconde condition, le codage du troisième signal pour obtenir un troisième paquet de données, le troisième paquet de données comprenant des troisièmes informations d'indication indiquant le second seuil de détection tactile, et le deuxième signal et le troisième signal correspondant à un même flux tactile ; et
l'envoi du troisième paquet de données à l'élément de réseau UPF.

2. Procédé de communication, comprenant :

la réception (802) d'un premier paquet de données provenant d'un serveur, le premier paquet de données comprenant des premières informations d'indication indiquant un premier seuil de détection tactile ; et
l'envoi (803) d'un quatrième paquet de données à un dispositif de réseau d'accès (102) en utilisant un premier flux de qualité de service, QoS, le quatrième paquet de données comprenant des quatrièmes informations d'indication indiquant le premier seuil de détection tactile, et le premier flux de QoS étant un flux de QoS correspondant au premier seuil de détection tactile ; et

le procédé comprenant en outre :

la réception (806) d'un deuxième paquet de données provenant du serveur, le deuxième paquet de données comprenant des deuxièmes informations d'indication indiquant le premier seuil de détection tactile, le premier paquet de données correspondant à un premier signal, le deuxième paquet de données correspondant à un deuxième signal, le premier signal, le deuxième signal et le premier seuil de détection tactile satisfaisant une première condition, et le premier signal et le deuxième signal correspondant à un même flux tactile ; et

l'envoi (807) d'un cinquième paquet de données au dispositif de réseau d'accès (102) en utilisant un deuxième flux de QoS, le cinquième paquet de données comprenant des cinquièmes informations d'indication indiquant le premier seuil de détection tactile, et le deuxième flux de QoS étant un flux de QoS correspondant au premier seuil de détection tactile.

3. Procédé selon la revendication 2, le procédé comprenant en outre :

la réception d'un troisième paquet de données provenant du serveur, le troisième paquet de données comprenant des troisièmes informations d'indication indiquant un second seuil de détection tactile, le troisième paquet de données correspondant à un troisième signal, le deuxième signal, le troisième signal et le second seuil de détection tactile satisfaisant une seconde condition, et le deuxième signal et le troisième signal correspondant à un même flux tactile ; et

l'envoi d'un sixième paquet de données au dispositif de réseau d'accès (102) en utilisant un troisième flux de QoS, le sixième paquet de données comprenant des sixièmes informations d'indication indiquant le second seuil de détection tactile, et le troisième flux de QoS étant un flux de QoS correspondant au second seuil de détection tactile.

4. Procédé selon l'une quelconque des revendications 2 à 3, le premier seuil de détection tactile correspondant à un premier taux d'erreur de paquets, PER, et le premier PER correspondant au premier flux de QoS.

5. Appareil de communication, comprenant un processeur (1901), le processeur (1901) étant couplé à une mémoire (1903), la mémoire (1903) étant configurée pour stocker un programme ou des instructions, et lorsque le programme ou les instructions sont exécutés par le processeur (1901), l'appareil étant autorisé à mettre en œuvre le procédé selon l'une quelconque des revendications 1 à 4.

6. Support de stockage lisible par ordinateur, le support de stockage lisible par ordinateur stockant un programme informatique ou des instructions informatiques, et lorsque le programme informatique ou les instructions informatiques sont exécutés, le procédé est implémenté selon l'une quelconque des revendications 1 à 4.

104

103

102

Core network

101

FIG. 1

UE: User equipment
AN: Access network
UPF: User plane function
DN: Data network
AMF: Access and mobility management function
SMF: Session management function
PCF: Policy control function
NEF: Network exposure function
AF: Application function

FIG. 2

UE: User equipment
AN: Access network
UPF: User plane function

FIG. 3

AP: Access point

FIG. 4

FIG. 5

FIG. 6

| UE | | Access network device | | UPF |
|---|---|---|---|---|

PDU session

| RB: Radio bearer | NG-U tunnel |
|---|---|

QoS flow

QoS flow

RB: Radio bearer

QoS flow

Wireless                    N3

FIG. 7

| Server | UPF network element | Access network device | Terminal device |

801: Encode a first signal to obtain a first data packet

802: First data packet: first indication information indicating a first tactile sensing threshold

803: Send a fourth data packet by using a first QoS flow: fourth indication information

804: Send a seventh data packet by using a first DRB

805: When the first signal, a second signal, and the first tactile sensing threshold meet a first condition, encode the second signal to obtain a second data packet

806: Second data packet: second indication information indicating the first tactile sensing threshold

807: Send a fifth data packet by using a second QoS flow: fifth indication information

808: Send an eighth data packet by using a second DRB

FIG. 8

| IP | UDP | RTP | Valid payload |
|----|-----|-----|---------------|

| IP | UDP | First indication information | RTP | Valid payload |
|----|-----|------------------------------|-----|---------------|

FIG. 9

| Data packet header | Contact 1 |
|--------------------|-----------|

| Data packet header | Contact 2 |
|--------------------|-----------|

...

FIG. 10

| Data packet header | Contact 1 | Contact 2 | ... | Contact N |
|--------------------|-----------|-----------|-----|-----------|

FIG. 11

Bit

| Number of rows | 8 | 7 | 6 | 5 | 4 | 3 | 2 | 1 |
|---|---|---|---|---|---|---|---|---|
| 1 | Version | | | PT | (*) | E | S | PN |
| 2 | Message type | | | | | | | |
| 3 | Length of a first row | | | | | | | |
| 4 | Length of a second row | | | | | | | |
| 5 | Tunnel endpoint identifier (tunnel endpoint identifier) of the first row | | | | | | | |
| 6 | Tunnel endpoint identifier of the second row | | | | | | | |
| 7 | Tunnel endpoint identifier of a third row | | | | | | | |
| 8 | Tunnel endpoint identifier of a fourth row | | | | | | | |
| 9 | Sequence number of the first row | | | | | | | |
| 10 | Sequence number of the second row | | | | | | | |
| 11 | N-PDU number | | | | | | | |
| 12 | Next extension header type (next extension header type) | | | | | | | |

FIG. 12

■ Tactile sensing threshold

| Server | UPF network element | | Access network device | | Terminal device |
|--------|--------|--------|--------|--------|--------|
| APP | APP | APP | | | APP |
| TCP/UDP | TCP/UDP | TCP/UDP | | | TCP/UDP |
| IP | IP | IP | | | IP |
| | | GTP-U | GTP-U | SDAP | SDAP |
| | | UDP | UDP | PDCP | PDCP |
| Lower layer | Lower layer | IP | IP | RLC | RLC |
| | | L2 | L2 | MAC | MAC |
| | | L1 | L1 | PHY | PHY |

Server — N6 — UPF network element — N3 — Access network device — Uu — Terminal device

FIG. 13

EP 4 482 121 B1

| Server | SMF network element | UPF network element | Access network device |
|---|---|---|---|

1401: Determine a first tactile sensing threshold

1402: First tactile sensing threshold and information about a tactile flow corresponding to the first tactile sensing threshold

1403: First tactile sensing threshold and information about the tactile flow corresponding to the first tactile sensing threshold

1404: First tactile sensing threshold and information about the tactile flow corresponding to the first tactile sensing threshold

FIG. 14

| APP |
|---|
| HTTP/2 |
| TCP |
| IP |
| L2 |
| L1 |

| APP |
|---|
| HTTP/2 |
| TCP |
| IP |
| L2 |
| L1 |

Tactile sensing threshold

AF network element

NEF/PCF network element

FIG. 15

| Terminal device | Access network device | UPF network element |
|---|---|---|

**1601:** Encode a first signal to obtain a first data packet

1602: First data packet →

1603: Fourth data packet →

**1604:** When the first signal, a second signal, and a first tactile sensing threshold meet a first condition, encode the second signal to obtain a second data packet

1605: Second data packet →

1606: Fifth data packet →

FIG. 16

Processing unit  1701

Interface unit  1702

FIG. 17

Interface
unit   1801

FIG. 18

Processor 1901

Interface circuit
1902

Memory 1903

FIG. 19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **STEINBACH ECKEHARD et al.** Haptic Codecs for the Tactile Internet. *PROCEEDINGS OF THE IEEE*, 01 February 2019, 447-470